# EUROPÄISCHE PATENTANMELDUNG

(11) **EP 1 182 537 A2**
(43) Veröffentlichungstag der Anmeldung: **27.02.2002**
(21) Anmeldenummer: 01120167.0
(22) Anmeldetag: 22.08.2001
(51) Int. Cl.: G06F 1/16

(54) **Tragbare Vorrichtung zur Aufnahme und transportsicheren Halterung von Geräten und/oder Zubehör eines mobilen Büros**

(30) Priorität: 22.08.2000 DE 10041213; 22.08.2000 DE 10041214
(71) Anmelder: TSP Gesellschaft für Teleprocessing Systems & Products mbH, 90556 Cadolzburg (DE)
(72) Erfinder: Egerer, Norbert, 91459 Markt Erlbach (DE); Henn, Frank, 90766 Fürth (DE); Kirchhoff, Kurt, 91074 Herzogenaurach (DE); Bräun, Lothar, 91334 Hemhofen (DE); Egermeier, Bernhard, 91489 Wilhermsdorf (DE)
(74) Vertreter: Dreykorn-Lindner, Werner, Dipl.-Ing.

(57) **Zusammenfassung**

Bekannt sind Handkoffer bzw. transportsichere Halterungen von Geräten für unterschiedliche Anwendungen, insbesondere für ein mobiles Büro.

Um eine einfache Anpassbarkeit an unterschiedliche Anwendungen, einen transportsicheren Halt der elektrischen Geräte sowie die Inbetriebnahme oder den Austausch durch Geräte anderer Abmessungen einem ungeübten Benutzer zu ermöglichen, besteht die erfindungsgemäße tragbare Vorrichtung bei einer ersten Ausgestaltung aus
- einem Gehäusegrundkörper (A1),
- einer als Deckel für den Gehäusegrundkörper (A1) ausgebildeten Montageplatte (A5),
- einer plattenförmigen Halterung (A2), die auf der Montageplatte (A5) befestigt ist und durch ein manuelles Betätigungselement zwischen zwei Positionen bewegbar ist;
bei einer zweiten Ausgestaltung aus
- einem zweiteilige Gehäuse (1, 5), wobei
- außen am Gehäuseoberteil (5) ein Laptop durch manuelle Betätigung einer zwischen zwei Positionen verschiebbaren Halterung (21, 22) in Form- oder Klemmeingriff lösbar befestigt ist;
und bei einer dritten Ausgestaltung aus
- einem Handkoffer mit einer im Abstand zum Kofferboden gelagerten Montageplatte (M), wobei
- in Führungsschlitzen (F) der Montageplatte (M) verschiebbare Befestigungsmittel (B) vorgesehen sind, welche auf der Montageplatte (M) angeordnete Geräte und/oder Zubehör in Form- und/oder Klemmeingriff halten und wobei
- die Montageplatte (M) schwenkbar gelagert und durch Rastmittel in einer Schließstellung and der Kofferschale (K) festgelegt ist.

Die Erfindung liegt auf dem Gebiet mobiles Büro.

## Beschreibung

Die Erfindung betrifft in erster Linie eine tragbare Vorrichtung zur Aufnahme und transportsicheren Halterung von Geräten und/oder Zubehör eines mobilen Büros gemäß der Patentansprüche 1, 10 und 15.

Solche Vorrichtungen sind in der Regel meist als Koffer ausgestaltet, welche bereits in vielfältigen Ausgestaltungen und Gerätebestückungen bekannt sind. Beispielsweise dienen diese für den mobilen Einsatz von Personal-Computern im Außendienst zur DV-gestützten Kundenberatung vor Ort, wie er z.B. für Außendienstmitarbeiter, Handelsvertreter, Servicereisende oder andere Berufen notwendig ist.

Da sowohl die Geräte, meist Kleincomputer (z.B. Laptop oder Notebook oder Penbased-Systeme), als auch die zugehörigen Peripheriegeräte zum einen empfindlich sind und zum anderen einfach und zusammenhängend transportabel sein sollen, werden diese Geräte in einem Handkoffer - vorzugsweise aus Metall - untergebracht. Diese Handkoffer sind in der Regel sehr robust und dessen Trägerelemente sind für ein Mehrfaches des Gewichts der Geräte, das in der Regel zwischen 1 und 7 kg liegt, konzipiert.

Es sind auch Handkoffer bekannt, die ein an die Gerätekontur angepasstes Formteil zur Halterung des Gegenstandes aufweisen. Beispielsweise ist zur lagesicheren Halterung empfindlicher Gegenstände aus der DE 30 02 407 A1 ein Koffer bekannt, dessen Kofferschalen mit jeweils einem Rahmen aus Metall versehen sind, mit denen Kofferbeschläge verbunden sind, und welcher eine Schalenausfütterung aus Schaumstoff, die einem im Koffer aufzubewahrenden Gegenstand, nämlich einen Tennisschläger, angepasst (einschließlich Vorsprünge im Schaumstoff) ist, aufweist. Im einzelnen ist für eine klimastabile Lagerung vorgesehen, dass beide Rahmen allseitig von dem Schaumstoff umgeben sind, der dort eine Profilierung mit einer Dichtlippe und mit zwei parallel zueinander verlaufenden und mit der Ebene des Koffers einen Winkel einschließenden Anlageflächen aufweist. Weiterhin ist im Schaumstoff des Koffers wenigstens eine zum Inneren des Koffers offene Kammer zur Aufnahme eines die Luftfeuchtigkeit stabilisierenden Mittels ausgebildet.

Um in der Kontur sehr unterschiedliche Bau- und/oder Maschinenteile und/oder Werkzeuge und/oder Flaschen oder ähnliche Gegenstände aufnehmen zu können, ist aus der DE 195 10 982 A1 ein Koffer mit zwei Kofferhälften, die aus thermoplastischem Kunststoff geformt sind und jeweils eine Außenschale und eine Innenschale aufweisen, bekannt. Hierfür weist zumindest eine der Innenschalen des Handkoffers ein Raster aus gereihten und sich kreuzenden Halterungsaufnahmen auf, welchen ein Satz von Halterungselementen zugeordnet ist, die wahlweise in die Halterungsaufnahmen einsetzbar sind. Die Gegenstände sind durch in unterschiedliche Halterungsaufnahmen eingesetzte Halterungselemente fixierbar, wobei die Halterungselemente nach Maßgabe der auf die Innenschale bezogenen Kontur der Bau- und/oder Maschinenteile und/oder Werkzeuge und/oder Flaschen oder sonstigen Gegenstände in die Halterungsaufnahmen eingesetzt werden.

Um in einem Handkoffer alle für eine Auftragsbearbeitung notwendigen Geräte und erforderliches Zubehör deponieren zu können, ist beispielweise aus dem DE 91 12 987 U1 ein Handkoffer mit einem im Kofferunterteil angeordneten, vorzugsweise aus Schaumgummi gebildeten Arretierungsteil bekannt, bei welchem das Arretierungsteil passgenaue Ausnehmungen zur Aufnahme eines Notebooks und eines Druckers aufweist. Das Arretierungsteil deckt ein Behältnis ab, das auf dem Kofferboden aufliegt und in dem Endlospapier lagerbar ist, wobei in dem Arretierungsteil im Bereich der Ausnehmung für den Drucker ein Schlitz vorgesehen ist, durch den das Endlospapier führbar ist. Auf der rückwärtigen Schmalseite des Kofferunterteils sind Anschlüsse vorgesehen, die einerseits mit dem Notebook anderseits mit dem Drucker und anderen externen peripheren Einheiten verbunden sind. Dadurch ist es möglich, die im Notebook und Drucker angeordneten Akkumulatoren aufzuladen, indem ein außerhalb des Handkoffers an das Stromnetz anzuschließender Transformator mit dem entsprechenden Steckanschluss verbunden wird.

Eine ähnliche Ausgestaltung eines Kastens oder Koffers zur betriebsbereiten Lagerung der Bedienungs- und Betriebskomponenten eines Personal- oder Heimcomputers ist aus dem DE 85 00 180 U1 bekannt. Im Handkoffer ist eine Grundplatte vorgesehen, auf der mehrere Halterungen zur Aufnahme der Zentraleinheit mit Tastenfeld, eines Band-Kassetten-Gerätes, "Joy-Sticks" und weiterer Kleineinheiten ausgebildet sind, wobei jedem Gerät ein Aufnahmeraum für sein Anschlusskabel zugeordnet ist. Die Halterungen und Aufnahmeräume für die Anschlusskabel sind vorzugsweise in Form von Vertiefungen in der Grundplatte ausgebildet, indem die Grundplatte aus einer tiefgezogenen Kunststoffplatte gebildet ist. Die Anpassung an verschiedene Gerätekonturen, kann beim Gegenstand des DE 85 00 180 U1 durch ein separates Halterungsteil erfolgen, das auf eine entsprechende Halterung auf der Grundplatte aufsetzbar ist. Der Grundriss dieses separaten Halterungsteils für das Band-Kassetten-Gerät - und damit der Grundriss seiner Aufnahme-Halterung auf der Grundplatte - entsprechen dann dem Grundriss des Disketten-Gerätes oder auch dem Grundriss eines weiteren separaten Halterungsteils für das Disketten-Gerät. Die separaten Halterungsteile für das Disketten-Gerät und für das Band-Kassetten-Gerät können mit gleichem Grundriss ausgebildet werden, so dass diese in ihren entsprechenden Halterungen auf der Grundplatte neben und über der Zentraleinheit mit Tastenfeld untereinander austauschbar sind. Darüber hinaus kann das separate Halterungsteil für das Disketten-Gerät und/oder das Halterungsteil für das Band-Kassetten-Gerät gleichen Grundriss aufweisen wie die Aufnahmehalterung für die Zentraleinheit mit dem Tastenfeld, so dass sämtliche dieser drei Einheiten bzw. separaten Halterungsteile auf der Grundplatte untereinander austauschbar sind. Die Aufnahmeräume für die Anschlusskabel in der Grundplatte und in den separaten Halterungsteilen sind insgesamt oder teilweise mit abnehmbaren Abdeckungen versehen. Sie können auch statt dessen oder ergänzend mit Haltevorrichtungen vorzugsweise in Form von übergreifenden Klammern für die gewickelten Kabel versehen sein. Einige oder sämtliche Halterungen in Form von vertieften Aufnahmen in der Grundplatte und/oder in den separaten Halterungsteilen sind an den Seitenwandungen der Aufnahmen mit Klemmvorrichtungen vorzugsweise in Form von Vorsprüngen zur klemmenden Halterung der eingesetzten Teile versehen.

Weiterhin ist aus der DE 42 20 051 C2 ein Kommunikations-Aktenkoffer mit jeweils einem Kofferunterteil und einem Kofferoberteil bekannt, bei dem das Kofferunterteil eine Außenschale und wenigstens einer Innenschale aufweist. Die ersten und zweiten Seitenwandteile des Kofferunterteils sind im Bedienbereich der Eingabetastatur und der Massenspeichereinheit des eingesetzten Kleincomputers zur Anpassung an das niedrige Niveau der Eingabetastatur weniger hochstehend ausgebildet als im restlichen Bereich, wobei zum formschlüssigen Ausgleich dieser Ausbildung bei geschlossenem Koffer das erste und zweite Seitenteil des Kofferoberteils in diesem Bereich entsprechend ausgebildet sind, wodurch der Koffer eine zwischen Kofferunterteil und Kofferoberteil asymmetrisch/stufenartig verlaufende Schliesskante aufweist. Zur freien Zugänglichkeit des Kleincomputers ist eine Hebevorrichtung zum Anheben des Kleincomputers aus seiner Betriebspositionsanordnung im Kofferunterteil vorgesehen, wobei ein Sammelsteckblock in die Hebevorrichtung integriert ist. Eine Sammelanschlussleiste ist getrennt von dem Sammelsteckblock im Koffer für eine im Koffer zusammengefasste Anordnung der Anschlußvorrichtungen für externe Kabelverbindungen ausgebildet, wobei eine Zugangsöffnung für den Zugang von außen zu der Sammelanschlussleiste bei geschlossenem Koffer in der Kofferaußenwand sowie eine abschließbare schwenkbar angeordnete Verdeckvorrichtung vorgesehen ist. Schließlich ist auch eine Gerätebelüftungseinrichtung vorgesehen, gebildet aus wenigstens einem Belüftungskanal und einem damit in Verbindung stehenden Ventilator, einer Zuluftöffnung und einer Abluftöffnung, welche zum Gerätebetrieb bei geschlossenem Koffer mit der Atmosphäre in Verbindung gebracht werden kann.

Im Hinblick auf die Anpassungsfähigkeit des Koffers gemäß der DE 42 20 051 C2 an Kleincomputer-Weiterentwicklungen, betätigt die Hebevorrichtung zum Anheben des Kleincomputers ein austauschbares Trageelement für den Kleincomputer. Somit kann bei einem Geräteaustausch auch das Tragelement für den Kleincomputer mit ausgetauscht werden, wodurch Schwierigkeiten bei dessen Arretierung im Kofferunterteil vermieden werden können. Das Tragelement kann unterschiedliche Gestalt haben, um es jeweils, im Hinblick auf eine transportsichere Arretierung, optimal an . das darauf anzuordnende Kleincomputers-(Prozessor-)Gehäuse anzupassen. Beispielsweise kann dies in Form einer Platte oder Winkelprofils aber auch nur in Form eines einfachen, gewichtssparenden Drahtrahmen erfolgen. Zur Arretierung des Kleincomputers auf dem Tragelement sind Halteklammern vorgesehen, die Klemmfedereigenschaft besitzen. Dadurch ist keine besondere Montagevoraussetzung am Tragelement und kein eigentliches Werkzeug zur Handhabung erforderlich. Bei einem Drahtrahmen als Tragelement kann die Halteklammer mit einem der entsprechend gebogenen Enden auf den Drahtrahmen aufgerastet und mit dem anderen Ende auf das Prozessor-Gehäuse des Kleincomputers aufgeschoben werden.

Schließlich sind Haltevorrichtungen im Kofferunterteil mit daran ortsveränderbar angeordneten Schrauben zur transportsicheren Arretierung der Geräte, Abdeckungen und Zubehör im Handkoffer vorgesehen. Die Haltevorrichtungen sind zwei rechtwinklige zueinander angeordnete, unterschiedlich lange Paare von in einem Abstand voneinander angeordneten ersten und zweiten Halteschienen mit einem flachen, U-profilartigen Querschnitt und einem Längsschlitz im U-Profil-Scheitel. Als Haltemittel sind Schrauben mit flachem Kopf vorgesehen, die von unten durch die Längsschlitze in den Halteschienen durchgesteckt sind. Mit nur vier Halteschienen können alle Halteaufgaben im Kofferunterteil gelöst werden, sowohl im vorgesehenen Kleincomputer-Anordnungsbereich als auch im restlichen Kofferunterteilbereich. So kann das kürzere Halteschienenpaar im Bereich der Kleincomputer-Anordnung zur Arretierung in beliebiger Richtung ebenso zur Arretierung der Abdeckblenden dienen, die notwendig sind, um die entstehenden Leerräume abzudecken. Das längere Halteschienenpaar kann im rechten Bereich des Kofferunterteils angeordnet werden, um dort die transportsichere Arretierung der unterschiedlichsten Geräte, Vorrichtungen und Abdeckblenden zu ermöglichen. Dazu kann bei entsprechendem Abstand der beiden Halteschienen voneinander ein Gerät zur Verringerung des Befestigungsaufwandes auch an nur einer Halteschiene arretiert werden, wenn die Geräte zum Ausgleich unterschiedlicher Gerätehöhe bereits in Halteschalen auf unterschiedlich hohe, am Innenschalenboden angeordneten Stützauflagen und zwischen Haltestempeln angeordnet sind. Diese Geräte brauchen nur noch von einer flachen, streifenförmigen Halteklammer aus einem Material mit Federeigenschaften im Kofferunterteil gehalten zu werden. Mittels Schraubhülsen, die durch Ausnehmungen in den Halteklammern hindurchgesteckt und auf die Schrauben in den Längsschlitzen der Halteschienen aufgeschraubt werden, ist ein Lösen und Feststellen von Hand möglich. Werden die im Koffer vorhandenen Geräte gegen andere mit anderen Abmessungen ausgetauscht, können die neu im Kofferunterteil anzuordnenden Geräte alle durch einfaches Verschieben der Schrauben in den Längsschlitzen der Halteschienen zum Anpassen an die neuen Gehäusemaße ebenfalls arretiert werden. Ist der Boden der Innenschale gerippt, so können die Querschnitte der Rippen an die Querschnitte des ersten und zweiten Paars von Halteschienen angepaßt und die Halteschienen in den Rippen zwischen Außenschale und Innenschale angeordnet werden. Die Längsschlitze in den ersten und zweiten Paaren von Halteschienen fluchten mit in den ersten und zweiten Rippen ausgebildeten Längsschlitzen, so dass die Halteschienen durch eine geeignete Verbindung von Kofferunterteil-Außenschale- und -Innenschale im Kofferunterteil verankert werden können. Dabei gewährleisten die miteinander fluchtenden Längsschlitze in den Halteschienen und Rippen, dass die von den Halteschienen gehaltenen Schrauben zur Arretierung von Geräten und Blenden unterschiedlicher Abmessungen frei hin- und herschiebbar sind.

Weiterhin ist aus der DE 296 20 676 U1 ein Koffer zur Aufnahme elektronischer Komponenten - insbesondere Laptop mit Drucker - bekannt, bei dem wenigstens eine vom Boden des Kofferdeckels oder des -bodens im Abstand befestigte Trägerplatte vorgesehen ist. Die Befestigungsmittel sind an der Trägerplatte an beliebigen Stellen befestigbar und treten mit der Komponente in Form- und/oder Klemmeingriff, wobei das Laptop über die Trägerplatte gegen den Boden festgespannt wird. Die Montage erfolgt dann bei einer ersten Ausführungsform als Rahmen derart, dass die Trägerplatte in Art des Rahmens mit einer Ausnehmung erzeugt wird, deren Abmessungen den Außenabmessungen der elektrischen Komponente entsprechen. Anschließend wird die elektronische Komponente in die Ausnehmung eingesetzt, worauf sie auf dem Boden des Deckels bzw. Korpus aufliegt. Vorzugsweise ist auf dem Boden eine Dämm- bzw. eine Isolierschicht aufgebracht, um Stöße als auch Wärme und/oder Geräusche zu dämmen. Danach werden in dem durch die Trägerplatte gebildeten Rahmenbereich Bohrungen für Befestigungsbolzen derart angebracht, dass eventuelle Anschluss-, Eingabe- oder Anzeigebereiche nicht beeinträchtigt werden und andererseits eine sichere Verspannung der Komponenten gegen den Deckel bzw. Korpusboden erzielt wird. Die Trägerplatte (Rahmen) selbst wird entweder an einer Auskehlung an den Seitenwänden des Deckels oder des Korpus mittels Befestigungselementen gehalten oder an einem mit den Seiten verbundenen Rahmenprofil. Bei der zweiten Ausführungsform ist die Trägerplatte als Montageplatte, z.B. Betonspanplatte, ausgebildet, auf der die Befestigungsmittel derart positioniert werden, dass eine sichere Befestigung des Laptops erzielt wird, ohne dass der Zugriff auf das Laptop, wie z.B. Anschlussanordnungen, Stecker, Betätigungselemente, Anzeigen etc. durch die Befestigungsmittel behindert wird. Die Montageplatte dient hier als Auflage für das Laptop und die Montage erfolgt derart, dass die elektronische Komponente aufgesetzt und anschließend auf der Montageplatte Positionen für Befestigungsbolzen bestimmt werden. An diesen Positionen werden dann Bohrungen für die Aufnahme der Befestigungsbolzen vorgesehen. Die Bolzen werden in den Bohrungen befestigt und die elektronische Komponente wird in dem vorher festgelegten Bereich zwischen den Befestigungsbolzen eingesetzt. Nun werden die quer zur Bolzenachse verschiebbaren Köpfe der Befestigungsbolzen, die eine Klemmfläche haben, gegen die Seitenwände der elektronischen Komponente festgezogen. Dies ist beispielsweise realisierbar über Befestigungsbolzen, die kopfseitig eine geneigte Rampenfläche haben, die mit einer geneigten Rampenfläche eines Andruckelementes in Wechselwirkung tritt. Das Andruckelement wird durch eine Schraube gegen den Befestigungsbolzen festgezogen. In dem Andruckelement ist ein Langloch ausgebildet, so dass das Andruckelement quer zur Bolzenachse in Richtung auf die Komponente verschiebbar ist. Dabei wird nicht nur eine seitliche Verschiebung, sondern auch eine Verschiebung nach unten realisiert, wodurch die elektronische Komponente nicht nur seitlich, sondern auch gegen die Montageplatte verspannt wird. Weiterhin weist die Montageplatte eine zum Boden des Kofferdeckels bzw. Kofferkorpus gerichtete Abkantung an zwei entgegengesetzten Seiten auf. Hierdurch liegt die Montageplatte mit den Abkantungen auf dem Boden des Kofferdeckels bzw. Korpus auf. Die Montageplatte wird nun über spezielle Befestigungsbolzen gegen eine Auskehlung in den Seitenwänden den Deckels bzw. Korpus verspannt. Diese Befestigungsbolzen sind kopfseitig in der Montageplatte gehalten und weisen einen über das Gewinde verstellbaren quer zur Bolzenachse gerichteten Schwenkhebel auf, der in Befestigungsstellung in die Auskehlung der Seitenwand des Koffers eingreift. Die Befestigungsstellung und die Lösestellung des Schwenkhebels oder der Schwenkarme wird hierbei durch die Abkantung festgelegt, welche im Bereich dieser vorgegebenen Befestigungselemente Durchbrüche haben, die ein Ein- und Ausschwenken den Fortsatzes erlauben. Weiterhin kann die Durchbrechung seitlich begrenzt sein, so dass die Befestigungsstellung des Fortsatzes durch die seitliche Anlage des Schwenkhebels an der Abkantung definiert ist, wobei sie genau quer über die Abkantung nach außen hinaustritt und somit in die Auskehlung der Seitenwand eingreifen kann, während sie in Lösestellung unter der Montageplatte verschwindet. Beim Festziehen dieser Befestigungselemente zur Befestigung der Montageplatte an dem Koffer wird zuerst der Fortsatz in seine Befestigungsstellung gedreht, bis er an der Abkantung anliegt. Anschließend wird der Schwenkhebel, der bolzenseitig durch eine das Gewinde des Schraubbolzens umgreifende Innengewindehülse gehalten ist, bei Drehung des Schraubbolzens nach oben bewegt, bis der Fortsatz nach oben hin gegen die Auskehlung der Seitenwand des Koffers anliegt und dadurch die Montageplatte gegen den Boden des Kofferdeckels bzw. Kofferkorpus festspannt. Sowohl unter der Montageplatte als auch unter dem Rahmen kann im Zwischenraum (Abstand zwischen Trägerplatte/Rahmen und Kofferwand) auch noch eine Wärme-, Schall- und/oder elektrische Isolierschicht vorgesehen werden, um einerseits mechanische Schwingungen und Stöße von der elektronischen Komponente fernzuhalten und andererseits eine Weitergabe eventueller Betriebsschwingungen oder -Geräusche der Komponente an die Umgebung zu unterbinden; zudem kann die Schicht bezüglich der Montageplatte als Federung beim Festspannen der Platte gegen den Boden des Koffers dienen. Am Rand der Montageplatte können statt oder zusätzlich zur Abkantung auch Gummistöpsel vorgesehen sein, die als Abstandshalter zur Seitenwand des Koffers dienen.

Um Arretier- und die Positioniermittel, welche bei geschlossenem Koffer zusammenwirken, auf besonders einfache Weise und auch vom handwerklich Ungeübten rasch an das im Koffer befindliche Gerät anzupassen, ist es aus der DE 197 07 920 C1 bekannt, dass das Arretiermittel bei geöffnetem Koffer in eine das kleinstmögliche Gerät erfassende Position einstellbar ist. Beim Schließen des Koffers und Kontaktieren des Arretiermittels mit der Außenfläche des Gerätes stellt sich dieses selbsttätig und selbsthaltend auf die passende Position ein, bis diese Position mittels einer wiederlösbaren Fixiervorrichtung endgültig arretierbar ist. Das Prinzip beruht somit im wesentlichen darauf, Arretiermittel in einer Kofferschale derart auszubilden und anzuordnen, dass bei geöffnetem Koffer das Arretiermittel zunächst in eine Maximalauslage bringbar ist. Beginnt man den Koffer zu schließen, so kontaktiert das Arretiermittel eine Außenfläche des Gerätes und verstellt sich dabei, bis der Koffer vollständig geschlossen ist, in die gewünschte und dem momentan verwendeten Gerät exakt entsprechende Position. Nun wird der Koffer wieder geöffnet, wobei das Arretiermittel in der voreingestellten Position verbleibt. Anschließend wird diese Position endgültig fixiert. Jedes Arretiermittel kann von einem schwenkbaren Niederhalter gebildet werden, der in der Kofferoberschale oder an einer Zwischenwand, die an der Kofferoberschale angeordnet ist, angelenkt ist. Vor dem Anpassen wird bei geöffnetem Koffer der Niederhalter in eine Position verschwenkt, in der er beim Schließen des Kofferdeckels die Außenflächen des Gerätes berührt, das in der Kofferunterschale untergebracht ist. Während des Schließens .der Deckelschale wird der Niederhalter in seine Endposition verschwenkt. Nun wird der Koffer geöffnet und der Niederhalter mittels einer Spannschraube festgelegt. Somit vollzieht sich die Anpassung des Arretiermittels an das Gerät praktisch selbsttätig und ist deshalb einfach und benutzerfreundlich.

Weiterhin ist aus der DE 42 16 127 A1 ein Computer bekannt, der zum einen wie ein herkömmlicher Laptop und zum anderen - durch die Möglichkeit der Trennung der Bedien- und Anzeigeeinheit von der Zentraleinheit - in Fahrzeugen betrieben werden kann. Hierzu ist das Displaymodul in einem separaten Gehäuse untergebracht, das so gestaltet ist, dass es im herausgenommenen Zustand aufgestellt oder befestigt werden kann und es, wenn es im Computer eingebaut ist, mit dem Computer eine Einheit bildet. Im einzelnen ist eine Halteplatte vorgesehen, welche durch die Lagerung mit einem Scharnier aufgeklappt werden kann, wobei das Displaymodul bei aufgeklappter Halteplatte leicht aus dem Gehäusedeckel entnommen werden kann. Die Halteplatte selbst kann durch Schrauben oder Schnappverschlüsse entriegelt werden.

Schließlich ist aus der DE 44 11 156 A1 ein Handkoffer bekannt, in welchem das PC (Notebook)-Gerät und der daran angeschlossene Drucker für den Transport ortsfest und raumsparend sowie bedienungsfreundlich für die Benutzung angeordnet sind. Im einzelnen ist vorgesehen, dass der Drucker und das PC-Gerät vom Koffer lösbar auf einer Grundplatte befestigt sind. Die Grundplatte kann mittels am Kofferboden befestigter Arretierungen lösbar am Kofferboden befestigt sein. Der Drucker und das PC-Gerät können mittels Befestigungsbolzen an der jeweiligen Grundplatte befestigt sein. Die Befestigungsbolzen, mit denen die Geräte an den Grundplatten befestigt sind, besitzen Ausnehmungen, welche an die Ecken der Gerätegehäuse angepasst sind, so dass eine einwandfreie Fixierung mit Hilfe der Bolzen an den beiden Grundplatten erreicht wird. Bevorzugt sind vier Bolzen für jedes Gerät an den jeweiligen Ecken vorgesehen. Die Bolzen können Niederhalteplättchen aufweisen, welche am oberen Ende der jeweiligen Bolzen befestigt sind. Durch diese Niederhalteplättchen, welche in entsprechende Abstufungen an den Ecken der Geräte eingreifen, ist eine lagesichere Positionierung der Geräte im Kofferinnern und auf der Grundplatte in jeder Richtung gewährleistet. Während der Drucker auf der Grundplatte ortsfest im Kofferinnern angeordnet ist, lässt sich die Grundplatte mit dem daran befestigten PC-Gerät teleskopartig mit Hilfe einer Auszugsschiene nach Herunterklappen eines Deckels aus dem Kofferinnern ausfahren.

Die vorstehend beschriebenen Handkoffer weisen im Hinblick auf die Bedienbarkeit sowohl der flachen Eingabe-Tastatur eines Laptops oder der Schreibplatte (im Falle der Penbased-Systems) als auch des meist seitlich darunter angeordneten Diskettenlaufwerkes oder Speichererweiterungskarten Nachteile auf. So sind die Unterteile der üblicherweise verwendeten Koffer für eine bequeme, ermüdungsfreie Bedienung der Eingabe-Tastatur oder Schreibplatte zu hoch. Die Hände können hierbei wegen des hohen Randes der Seitenwandung des Kofferunterteiles nicht auf der Unterlage, auf der das Kofferunterteil, liegt, abgestützt werden. Um dem abzuhelfen, bietet es sich jedoch nicht an, nur die Seitenwand des Kofferunterteils in der Höhe zu kürzen, da dadurch der Koffer entsprechend flacher würde und somit sein gern genutztes Fassungsvermögen im Kofferoberteil zur Einbringung von Büroutensilien, Papier usw. vermindert werden würde. Darüber hinaus sind die Schächte der Diskettenlaufwerke und der. Speichererweiterungskarten durch die übliche transportsichere Anordnung im Kofferunterteil kaum mehr direkt, sondern oft nur durch aufwendige Handhabung zugänglich, so dass das Laptop für ein unbehindertes Einlegen und Entnehmen der Disketten/steckbaren Speicher eigentlich jedes Mal aus dem Kofferunterteil herausgenommen werden müsste oder es müsste die mechanisch aufwendige Lösung einer Auszugsschiene wie beim Gegenstand der DE 44 11 156 A1 benutzt werden.

Unpraktisch und unbequem ist auch, dass die bekannten Koffer einfacherer Bauart für jeden Betriebszweck erst geöffnet, also mit hochgeklapptem Kofferoberteil, aufgestelit werden müssen, um Datenein- oder -ausgabe oder auch den Ladevorgang für die Akkus durchführen zu können. Ein weiteres Problem bei der Konzeption derartiger Koffer besteht darin, dass die Laptops und Drucker oder auch andere elektronische Geräte keine standardisierten Außenabmessungen haben, so dass sich die sichere Befestigung dieser Komponenten im Koffer oft schwierig gestaltet, insbesondere dadurch, dass das in den Koffern installierte Laptop, bei gleichzeitiger Leistungssteigerung, immer kleiner wird. Eine Koffermodernisierung aber, durch Austausch des vorhandenen gegen einen weiterentwickelten Kleincomputer oder eines dazugehörenden Kleindruckers, scheitert zumeist daran, dass aus Gründen der Transportsicherheit vorwiegend eine Festinstallation oder spezifische Geräteausstattung in der Innenausstattung im Kofferunterteil vorgesehen ist. Weiterentwickelte neue Geräte sind dann bei Koffern einfacherer Bauart nur unter hohem Aufwand oder gar nicht, zumindest aber kaum durch den Kofferbenutzer selbst im Koffer einbaubar. Dagegen spricht auch die dabei wieder vorzunehmende, meist unübersichtliche, wegen der beengten räumlichen Verhältnisse, schwierige kofferinterne Verkabelung der einzelnen Geräte. Solche Koffer werden deswegen oft ausgemustert und durch neue, mit weiterentwickelten Geräten bestückte Koffer ersetzt, obwohl die Koffer selbst noch verwendbar wären.

Weiterhin ist aus der DE 41 07 996 A1 eine Funkgeräteanordnung mit einem Handgerät und einer Halterung, in welche das Handgerät einsetzbar ist, bekannt. Unter anderem sind Mittel zur mechanischen Festlegung des Handgeräts in der Halterung und zur Herstellung elektrischer Verbindungen zwischen Halterung und Handgerät. Hierzu weist die Halterung eine Aufnahme auf, in die in einer ersten stabilen Grundstellung das Handgerät eingesetzt bzw. entnommen werden kann und die gegen eine Rückstellkraft in eine Betriebsstellung gebracht werden kann. Schließlich sind im schwenkbaren Gehäuse zur zeitweiligen Halterung von tragbaren Funkgeräten Verriegelungsmittel zur Festlegung eines in die Aufnahme eingesetzten Handgeräts in der Betriebsstellung der Aufnahme vorgesehen.

Aus dem DE 87 11 462 U1 ist ein Geräteträger für ein elektronisches Gerät mit einer Trägergrundplatte bekannt, die in entsprechende Führungen eines Gestells einschiebbar ist. Am Gestell ist eine Adaptervorrichtung mit Steckkontakten fest angebracht, die über Signal- und Stromversorgungsleitungen mit zentralen Einrichtungen verbindbar ist. Im einzelnen ist vorgesehen, dass am Geräteträger eine weitere Adaptervorrichtung mit Steckkontakten angebracht ist, die in Führungen am Gestell beim Einschieben der Trägergrundplatte derart eingreift, dass eine Steckverbindung zwischen der ersten und der weiteren Adaptervorrichtung herstellbar ist. Weiterhin sind auswechselbare Kabelbäume auf der Trägergrundplatte vorhanden, mit denen eine elektrische Verbindung zwischen den Anschlüssen des elektronischen Geräts und der weiteren Adaptervorrichtung herstellbar ist.

Schließlich ist aus der DE 44 08 295 A1 eine Vorrichtung zur funktionellen Zusammenfassung von elektrischen und/oder elektronischen Geräten, insbesondere für einen mobilen EDV-Arbeitsplatz bekannt. Für die Fixierung der Einzelgeräte ist eine jeweilige Halterung vorgesehen, wobei die Halterungen über Schiebe- und/oder Schwenkverbindungen mechanisch aneinander angeschlossen sind, während die Geräte elektrisch miteinander verbunden sind.

Wie die vorstehende Würdigung des Standes der Technik aufzeigt, sind unterschiedlich ausgestaltete Handkoffer für unterschiedliche Anwendungen bekannt. In der Regel wird der Koffer derart ausgestaltet, dass eine sichere und schnelle Befestigung der Komponenten möglich ist. Koffer einfacher Bauart weisen eine fest montierte Montageplatte bzw. eine fest montierte Schaumstoffplatte auf. Je mehr Anforderungen gestellt werden, z.B. ergonomisch günstige Bedienung, freie Zugänglichkeit der Schnittstellen im eingebauten Zustand der Geräte, Kühlung der Geräte soll den Umgebungsbedingungen des Tischbetriebes möglichst ähnlich sein, um so aufwendiger und damit teurer wird der Handkoffer selbst. Soll ein Austausch der installierten gegen weiterentwickelte oder auch neuartige Geräte derselben oder artverwandten Geräteklasse entsprechender Größenordnung vorgenommen werden, so ist zusätzlich eine Anpassung an elektronische Komponenten mit unterschiedlichen Abmessungen und damit eine entsprechende Ausgestaltung der Befestigung erforderlich, so dass häufig eine Neukonzeption des Koffers und auch eine geänderte Bedienung erforderlich ist. Besonders bedeutsam ist dies, weil sowohl die Computerindustrie als auch die Zubehörindustrie als äußerst fortschrittliche, entwicklungsfreudige Industrien anzusehen sind, die sehr schnell Verbesserungen und Vereinfachungen aufgreifen und in die Tat umsetzen.

Der Erfindung liegt die Aufgabe zugrunde, eine tragbare Vorrichtung für Geräte eines mobilen Büros derart auszugestalten, dass eine einfache Anpassbarkeit an unterschiedliche Anwendungen gegeben und ein transportsicherer Halt der elektrischen Geräte gewährleistet ist. Weiterhin soll die Inbetriebnahme sowie der Austausch eines installierten gegen ein weiterentwickeltes Gerät anderer Abmessungen auch durch einen ungeübten Benutzer vorgenommen werden können, wobei trotz der Anpassbarkeit an unterschiedliche Anwendungen sich die Herstellungs- und Montagekosten nicht wesentlich erhöhen.

Diese Aufgabe wird, ausgehend von einer Vorrichtung mit den Merkmalen im Oberbegriff des Patentanspruchs 1, dadurch gelöst, dass die Montageplatte als Deckel ausgestaltet ist und eine durch manuelle Betätigung zwischen zwei Positionen bewegbare, im wesentlichen plattenförmige Halterung und Teile eines Steckanschlusssystems trägt, wodurch die Halterung sowohl als Befestigungsmittel als auch als Mittel zur exakten Führung und lösbaren Halterung der elektrischen Verbindung des Steckanschlusssystems dient.

Die erfindungsgemäße Vorrichtung weist den Vorteil auf, dass auf überraschend einfache Art und Weise sowohl ein transportsicherer Halt der elektrischen Geräte gewährleistet wird, als auch deren Befestigung, Anschluss und Inbetriebnahme durch einen ungeübten Benutzer ermöglicht wird. Weiterhin ist von Vorteil, dass alle Schnittstellen im eingebauten Zustand der Geräte frei zugänglich sind und dass die Kühlung der Geräte den Umgebungsbedingungen des Tischbetriebes ähnlich ist.

Weiterhin wird diese Aufgabe von einer tragbaren Vorrichtung für ein mobiles Büro,
- welche als zweiteiliges Gehäuse ausgestaltet ist,
- das Gehäuseunterteil und das Gehäuseoberteil bestehen aus einer Bodenplatte mit angeformten Seitenwänden, wobei die sich senkrecht erstreckenden Seitenwände des Gehäuseunterteils an den Stirnseiten von den Seitenwänden des Gehäuseoberteils umgriffen werden und die sich überlappenden Teile der Seitenwände durch form- oder kraftschlüssige Mittel miteinander verbunden sind,
- außen am Gehäuseoberteil ist ein Laptop durch manuelle Betätigung einer zwischen zwei Positionen verschiebbaren Halterung in Form- oder Klemmeingriff lösbar befestigt,
- durch Ausnehmungen im Gehäuseoberteil herausgeführte Kabel sind mit den Anschlussanordnungen des Laptops steckbar verbunden, und
- die Seitenwände des Gehäuseunterteils tragen Buchsen zum Anschluss von Zubehör und einen Haltegriff
gemäß Patentanspruch 10 gelöst.

Die erfindungsgemäße Vorrichtung weist den Vorteil auf, dass auf überraschend einfache Art und Weise sowohl ein transportsicherer Halt der elektrischen Geräte gewährleistet wird, als auch deren Befestigung, Anschluss und Inbetriebnahme durch einen ungeübten Benutzer ermöglicht wird. Weiterhin ist von Vorteil, dass alle Schnittstellen im eingebauten Zustand der Geräte frei zugänglich sind und dass die Kühlung der Geräte den Umgebungsbedingungen des Tischbetriebes ähnlich ist. Bei einer Änderung der Abmessungen des zweiteiligen Gehäuses müssen lediglich die Abmessungen der angeformten Seitenwände verändert werden. Fertigungstechnisch wirkt sich bei der Montage die federelastische Verspannung der sich überlappenden Seitenteile unterstützend aus; daneben ist von Vorteil, dass keine scharfen Kanten entstehen. Ein keilförmiges Gehäuse ermöglicht eine ergonomisch günstige Bedienung der Tastatur durch den Benutzer ohne dass die Montagekosten sich erhöhen, da nur zwei Teile miteinander durch form- oder kraftschlüssige Mittel verbunden werden müssen. Vorzugsweise erfolgt die Montage durch Verrastung der beiden Teile, wobei sich die federelastische Verspannung der sich überlappenden Seitenteile unterstützend auswirkt. Schließlich ist von Vorteil, dass die Halterung fertigungstechnisch und auch bei der Montage einfach handhabbar ist und dass der zusätzliche Kostenaufwand (auch im Falle eines Austausches) hierfür gering ist.

Weiterhin wird diese Aufgabe von einer tragbaren Vorrichtung für ein mobiles Büro,
- welche als Handkoffer mit einer im Abstand zum Kofferboden gelagerten Montageplatte ausgestaltet ist,
- in Führungsschlitzen der Montageplatte sind verschiebbare Befestigungsmittel vorgesehen, welche auf der Montageplatte angeordnete Geräte und/oder Zubehör in Form- und/oder Klemmeingriff halten
- die Montageplatte ist schwenkbar gelagert und ist durch Rastmittel in einer Schließstellung an der Kofferschale festgelegt
gemäß Patentanspruch 15 gelöst.

Mit der Erfindung wird erreicht, dass die fest auf der Montageplatte befestigten Geräte (beispielsweise Notebook und Drucker) durch die Außenschale des Handkoffers voll gegen mechanische Belastungen, die von außen auf den Koffer einwirken, geschützt sind. Weiterhin ist von Vorteil, dass die Befestigungsmittel und die Schnittstellen frei zugänglich sind, so dass Anschluss und Inbetriebnahme durch einen ungeübten Benutzer und eine ergonomisch günstige Bedienung ermöglicht wird. Das Verschwenken der verrastbaren Montageplatte ist einfach handhabbar, wobei zum Lösen der Verrastung ein Durchgriff in der Montageplatte vorgesehen werden kann.

Bei einer bevorzugten Ausgestaltung der Erfindung ist, gemäß Patentanspruch 2, die Halterung in Führungsschlitzen der Montageplatte verschiebbar geführt. Weiterhin ist ein an der Montageplatte gelagerter federbelasteter Hebel mit einer über die Montageplatte herausragenden Handhabe vorgesehen, welche in einer Kulisse der Montageplatte derart geführt ist, dass der Hebel die Halterung mit der Federkraft gegen die Kulisse als Endanschlag zieht, wobei in dieser Position die elektrische Verbindung hergestellt ist.

Diese Ausgestaltung der Erfindung weist den Vorteil auf, dass die Halterung sowohl fertigungstechnisch günstig herstellbar ist, als durch den Benutzer einfach handhabbar ist. Weiterhin ist von Vorteil, dass sowohl eine sichere Führung des federbelasteten Hebels als auch eine unterstützende Zwangsläufigkeit für den Benutzer beim Lösen bzw. Schließen der elektrischen Verbindung erzielbar ist. Bedienerfreundlich wird die Herstellung der elektrischen Verbindung durch das hörbare und sichtbare Anschlagen in der Endposition signalisiert.

Vorzugsweise bilden, gemäß Patentanspruch 3, die Montageplatte zusammen mit einem Gehäusegrundkörper ein Gehäuse mit schräg gestellter Montageplatte aus, wobei die sich senkrecht erstreckenden Seitenwänden des Gehäusegrundkörpers an den Stirnseiten von der Montageplatte umgriffen werden. Der Gehäusegrundkörper besteht aus einer Bodenplatte mit angeformten Seitenwänden und die sich senkrecht zur Bodenplatte erstreckenden Seitenwände und die Montageplatte sind durch form- oder kraftschlüssige Mittel miteinander verbunden.

Das keilförmige Gehäuse ermöglicht eine ergonomisch günstige Bedienung der Tastatur durch den Benutzer ohne dass die Montagekosten sich erhöhen, da nur zwei Teile miteinander durch form- oder kraftschlüssige Mittel verbunden werden müssen. Vorzugsweise erfolgt die Montage durch Verrastung der beiden Teile, wobei sich die federelastische Verspannung der sich überlappenden Seitenteile unterstützend auswirkt.

Bei einer bevorzugten Ausgestaltung der Erfindung besteht, gemäß Patentanspruch 4, das Steckanschlusssystem aus einer an der Montageplatte zwischen zwei Endanschlägen beweglich gelagerten Steckvorrichtung und einer geräteintern gelagerten Buchse.

Diese Ausgestaltung der Erfindung weist den Vorteil auf, dass durch entsprechende Dimensionierung der beweglichen Lagerung auf einfache Art und Weise sowohl die Steckkräfte als auch beim Transport auf die Steckverbindung einwirkenden Kräfte aufgefangen werden können.

Vorzugsweise besteht, gemäß Patentanspruch 5, die Steckvorrichtung aus einer Leiterplatte mit eingelöteten Steckanschlusskontakten und einem an der Leiterplatte befestigten Steckrahmenteil, wobei die Leiterplatte in einem Teilbereich von einem U-Profil zur Ausgestaltung von einstellbaren Endanschlägen umgriffen wird und wobei auf der gegenüberliegenden Seite die Leiterplatte durch elastische Mittel an der Montageplatte gelagert ist. Die elastischen Mittel sind als Gummihülsen ausgestaltet, welche kraft- oder formschlüssig auf der Leiterplatte und der Montageplatte gelagert.

Durch diese Ausgestaltung der Steckverbindung (Docking-Port) kann eine Vielzahl von Steckkontakten auf engstem Raum realisiert werden. Weiterhin ist von Vorteil, dass die einwirkenden mechanischen Beanspruchungen sicher abgefangen werden und dass auch ein häufigen Stecken nicht eine wesentliche Verschlechterung der Kontaktsicherheit zur Folge hat. Schließlich ist diese Ausgestaltung der Erfindung kostengünstig herzustellen und zu montieren.

Vorzugsweise trägt, gemäß Patentanspruch 6, die Montageplatte auf der Unterseite eine Erhebung trägt, welche im Bewegungsweg des Hebels liegt und eine zusätzliche Vorspannkraft für die Spiralfeder des Hebels erzeugt. Weiterhin ist an einer der Seitenwände des Gehäusegrundkörpers ein Tragegriff angeordnet.

Dadurch wird auf einfache Art und Weise beim Nach-oben-Schieben der Montageplatte mit dem Notebook, die Verriegelung der Montageplatte sichtbar und hörbar eingerastet und somit dem Benutzer signalisiert, dass das Notebook jetzt richtig angeschlossen ist. Weiterhin ist von Vorteil, dass sowohl die gesamte Vorrichtung durch den Benutzer bequem getragen als auch für den Fall der Unterbringung in einer Tasche aus dieser herausgezogen werden kann.

Bei einer bevorzugten Ausgestaltung der Erfindung ist, gemäß Patentanspruch 7, im Innern des Gehäuses eine Leiterplatte angeordnet, welche mindestens eine Stromversorgungseinrichtung zur Speisung des Geräts und/oder von Zubehör aufweist, wobei die Leiterplatte und ein damit und sowohl mit dem Gerät als auch mit dem Zubehör in Verbindung stehender Akkumulator an der Bodenplatte gelagert sind. Vorzugsweise überwacht die Stromversorgungseinrichtung die Ladekapazität des Akkumulators, wobei das elektrische Gerät einen geräteinternen Akkumulator aufweist und bei einem Unterschreiten eines vorgebbaren Mindestwertes wird das elektrische Gerät auf den geräteinternen Akkumulator umgeschaltet.

Damit werden, bei angelegter externer Spannung, beispielsweise Notebook, Drucker und Modem mit Strom versorgt. Ist kein externes Netzteil angeschlossen und die Akkukapazität beispielweise zu 60 % verbraucht, dann schaltet die Notebook-Versorgung vom System-Akkumulator auf den Notebook-Akkumulator um. Lediglich der Drucker und das Modem werden noch vom System-Akkumulator versorgt. Dadurch ist sichergestellt, dass sich das System gleichmäßig entlädt.

Bei einer bevorzugten Ausgestaltung der Erfindung trägt, gemäß Patentanspruch 8, die Leiterplatte SMD-Leuchtdioden und eine Lichtleitereinheit, wobei das von den SMD-Leuchtdioden emittierte Licht mittels der Lichtleitereinheit und durch Ausnehmungen der Montageplatte zur Anzeigeseite umgelenkt wird. Die Lichtleitereinheit besteht aus stabförmigen Lichtleitern und einer Bohrungen aufweisenden Platte.

Diese Ausgestaltung der Erfindung weist den Vorteil auf, dass beispielsweise mit sieben Leuchtdioden eine Reihe von Funktionen angezeigt werden kann; beispielsweise zeigen/zeigt
- LED 1 bis LED 5: den Ladezustand an.
- LED 7: an, ob ein externes Netzteil angeschlossen ist.
- LED 6: den Ladevorgang an.

Weiterhin ist von Vorteil, dass die Montage der Lichtleitereinheit in der Fertigung rasch und positionsgenau zu den Ausnehmungen der Montageplatte durchführbar ist.

In Weiterbildung der Erfindung weist, gemäß Patentanspruch 11, die Halterung einen über das Gehäuseoberteil herausragenden Riegel und von diesem ver- und entriegelbare, in Führungsschlitzen des Gehäuseoberteils geführte, federbelastete Halteteile auf.

Diese Weiterbildung der Erfindung weist den Vorteil auf, dass sowohl eine sichere Führung des Riegels und der federbelasteten Halteteile als auch eine unterstützende Zwangsläufigkeit für den Benutzer beim Lösen der Halteteile erzielbar ist.

Bei einer bevorzugten Ausgestaltung der Erfindung sind, gemäß Patentanspruch 12, im Gehäuseinnern an der Bodenplatte des Gehäuseunterteils ein Akkumulator und mindestens ein Modul und/oder eine Baugruppe gelagert, welche entweder festverdrahtet oder mittels Steckverbindungen miteinander und mit dem Laptop elektrisch verbunden sind.

Diese Ausgestaltung der Erfindung weist den Vorteil auf, dass der Benutzer lediglich die aus der tragbaren Vorrichtung herausgeführten Verbindungskabel bei der Erstinbetriebnahme des Laptops anschließen muss und dass dieser danach für den Transport oder bei Benutzung keine neue Verschaltung vornehmen muss.

In Weiterbildung der Erfindung ist, gemäß Patentanspruch 13, eine zusätzliche Anschlussbox über eine vielpolige Steckverbindung mit der Vorrichtung elektrisch und mechanisch verbunden, wobei auf die Steckverbindung einwirkende Kräfte von den Seitenwänden aufgefangen werden und wobei über diese Steckverbindung ein externer Drucker, ein externer Monitor, eine externe Maus bzw. Tastatur und eine LAN-Verbindung herausgeführt sind.

Diese Weiterbildung der Erfindung weist den Vorteil auf, dass diese sowohl für den Außendienst als auch für den Innendienst mit leicht handhabbarer Adaptierfähigkeit an das home-office konzipiert ist, welche es dem Anwender erlaubt, auf einfachste Weise die Vorrichtung auch in dieser Umgebung zu betreiben.

Vorzugsweise ist, gemäß Patentanspruch 14, die Unterseite der Bodenplatte mit einem weichen Überzug versehen oder an der Unterseite der Bodenplatte sind Gummifüße angeordnet.

Dadurch kann die erfindungsgemäße Vorrichtung einerseits direkt auf kratzempfindliche Oberflächen gestellt werden, anderseits werden beim Transport einwirkende Stöße entsprechend gedämpft.

In Weiterbildung der Erfindung ist, gemäß Patentanspruch 9, die Montageplatte schwenkbar gelagert und diese ist durch Rastmittel in einer Schließstellung an der Kofferschale festgelegt. Hierbei sind, gemäß Patentanspruch 12, im Zwischenraum unterhalb der Montageplatte Haltemittel für Zubehörteile angeordnet.

Diese Weiterbildung der Erfindung weist den Vorteil auf, dass sowohl die Aufnahmeräume für die Anschlusskabel, Module, Akkumulator oder dergleichen durch die Montageplatte insgesamt oder teilweise mit einer Abdeckung versehen sind als auch auf der Unterseite der Montageplatte einfach montierbare Haltevorrichtungen beispielweise in Form von übergreifenden Klammern für die Anschlusskabel, Module usw. angeordnete werden können. Das Verschwenken der verrastbaren Montageplatte ist einfach handhabbar, wobei zum Lösen. der Verrastung eine Durchgriff in der Montageplatte vorgesehen werden kann.

Bei einer bevorzugten Ausgestaltung der Erfindung sind, gemäß Patentanspruch 16, Kofferdeckel und Kofferboden lösbar miteinander verbunden und neben der Montageplatte ist eine seitlich benachbart und aus dem Kofferboden seitlich heraus verschwenkbare Tragplatte angeordnet.

Diese Ausgestaltung der Erfindung weist den Vorteil auf, dass mit einem Handgriff der Kofferdeckel abgenommen bzw. eine Verschwenkung durchgeführt werden kann, so dass eine ergonomisch günstige Bedienung und freie Zugänglichkeit der Schnittstellen im eingebauten Zustand der Geräte ermöglicht wird.

Schließlich ist, gemäß Patentanspruch 17, das Zubehör an der Tragplatte durch Klettverschlüsse befestigt, die Tragplatte ist über ein im wesentlichen plattenförmiges Zwischenprofil an der Kofferschale festgelegt und im Zwischenraum unterhalb der Montageplatte sind Haltemittel für Zubehörteile angeordnet.

Eine solche Tragplatte sowie Montageplatte ist kostengünstig herstellbar und das Lösen bzw. Schließen der Befestigung ist im Falle eines Austausches oder bei der Inbetriebnahme bzw. Befestigung der Zubehörteile auch für einen ungeübten Benutzer einfach handhabbar.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: eine Schrägansicht der erfindungsgemäßen Vorrichtung mit Montageplatte und Halterung sowie mit aufgestellter Antenne,
- FIG. 2: die Draufsicht auf den Gehäusegrundkörper vor dem Biegevorgang,
- FIG. 3: die Draufsicht auf die Montageplatte vor dem Biegevorgang,
- FIG. 4: die Draufsicht auf die Halterung vor dem Biegevorgang,
- FIG. 5: die Draufsicht und Seitenansicht auf einen Haltewinkel für eine Abdeckung einer beweglich gelagerten Steckvorrichtung vor und nach dem Biegevorgang,
- FIG. 6: die Draufsicht und Seitenansicht auf eine Abdeckung für den Haltewinkel nach FIG. 5 vor und nach dem Biegevorgang,
- FIG. 7: die Draufsicht auf einen Überzug in Form einer Rutschplatte angebracht auf der Bodenplatte,
- FIG. 8: einen Verriegelungshebel in Drauf- und Seitenansicht,
- FIG. 9: ein U-Profil zur Ausgestaltung von einstellbaren Endanschlägen in Drauf- und Seitenansicht,
- FIG. 10: die Draufsicht auf eine Montagehilfe für eine Lichtleitereinheit und
- FIG. 11: einen Antennenhalter für ein Funkmodem in Drauf- und Seitenansicht,
- FIG. 12: eine Schrägansicht einer zweiten Ausführungsform,
- FIG. 13a: eine dritte Ausführungsform der erfindungsgemäßen tragbaren Vorrichtung und
- FIG. 13b: die dritte Ausführungsform nach FIG. 13a mit aus dem Kofferboden heraus verschwenkter Tragplatte für das Zubehör eines mobilen Büros in perspektivischer Ansicht,
- FIG. 14: die Draufsicht auf das Gehäuseunterteil der zweiten Ausführungsform vor dem Biegevorgang und
- FIG. 15: das Gehäuseoberteil der zweiten Ausführungsform in Draufsicht und Seitenansicht,
- FIG. 16a FIG. 16b: die Abdeckung der Kabeldurchführungen im Gehäuseoberteil und den Haltewinkel hierzu der zweiten Ausführungsform jeweils in Draufsicht und Seitenansicht und jeweils vor und nach dem Biegevorgang,
- FIG. 17: für die zweite Ausführungsform eine Ausgestaltung einer verschiebbaren Halterung für ein Laptop in Seitenansicht und
- FIG. 18: ein Halteteil für die Halterung nach FIG. 17 der zweiten Ausführungsform in Draufsicht und Seitenansicht vor und nach dem Biegevorgang,
- FIG. 19: eine Ausführungsform für eine Gehäusegrundkörper einer seitlich anbaubaren Anschlussbox für ein mobiles Büro in Draufsicht und Seitenansicht und vor und nach dem Biegevorgang und
- FIG. 20: eine Abdeckung für den Gehäusegrundkörper nach FIG. 19 in Draufsicht und Seitenansicht und vor und nach dem Biegevorgang,
- FIG. 21: die Montageplatte der dritten Ausführungsform in Drauf- und Seitenansicht,
- FIG. 22: das Zwischenprofil der dritten Ausführungsform in Drauf- und Seitenansicht,
- FIG. 23: die Tragplatte der dritten Ausführungsform in Drauf- und Seitenansicht und vor und nach dem Biegevorgang,
- FIG. 24a und 24b: die Draufsicht auf Teile des Schwenkmechanismus für die Tragplatte nach FIG. 23,
- FIG. 25: für die dritte Ausführungsform eine in den Zwischenraum zwischen Montageplatte und Kofferboden einfügbare Einlage zur Aufnahme von Zubehör,
- FIG. 26: für die dritte Ausführungsform einen am Kofferkorpus befestigten Haltewinkel zur Schnappverriegelung der Montageplatte in Draufsicht und Seitenansicht vor und nach dem Biegevorgang
- FIG. 27a, 27b, 27c, 27d, 27e und 27f: Einzelheiten des Netzteils sowie der Ladezustandsüberwachung bei der Energieversorgung der erfindungsgemäßen Vorrichtung.

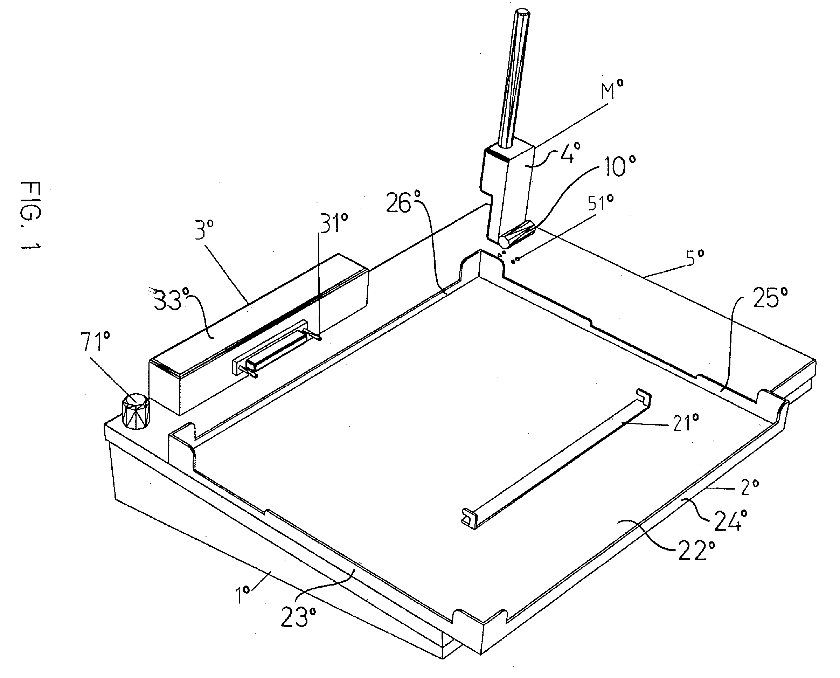

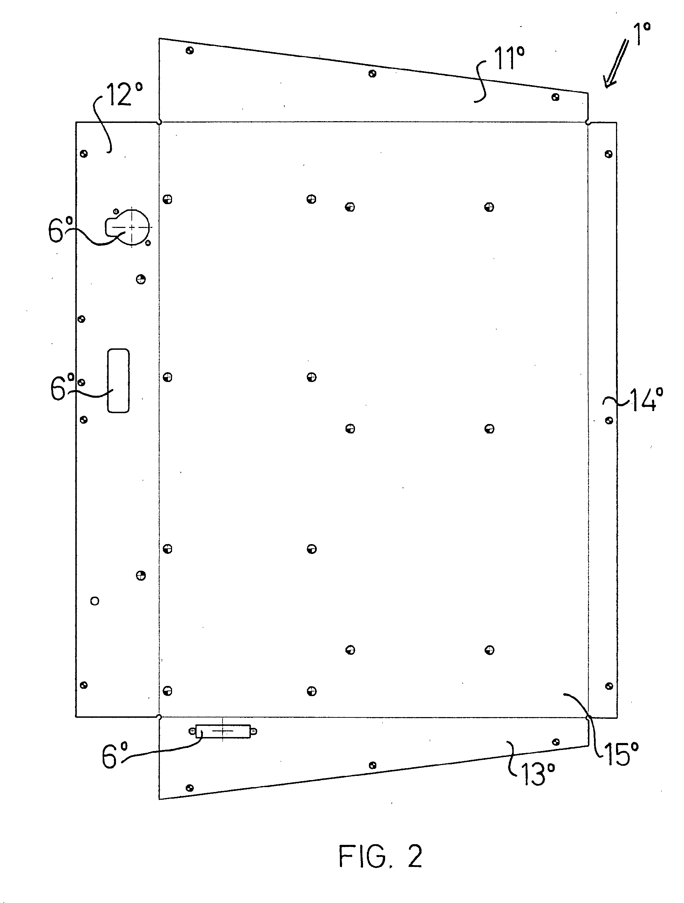

FIG. 1 zeigt eine Schrägansicht der erfindungsgemäßen Vorrichtung mit Montageplatte 5° und Halterung 2° für den Anwendungsfall mobiler Arbeitsplatz und die FIG. 2 bis FIG. 11 zeigen Einzelheiten hierzu. Im einzelnen ist die Montageplatte 5° als Deckel ausgestaltet und trägt eine durch manuelle Betätigung zwischen zwei Positionen bewegbare, im wesentlichen plattenförmige Halterung 2° sowie Teile eines Steckanschlusssystems 3°. Dadurch dient die Halterung 2° sowohl als Befestigungsmittel als auch als Mittel zur exakten Führung und lösbaren Halterung der elektrischen Verbindung des Steckanschlusssystems 3° (Docking-Adapter). Der Docking-Adapter 3° ermöglicht das leichte Anschließen des Laptop mit einem Handgriff. Mit dem Docking-Adapter 3° werden die serielle COM1 und die parallele LPT1 vom angeschlossenen Notebook auf die Leiterplatte heruntergeführt und das Notebook wird mit Strom versorgt.

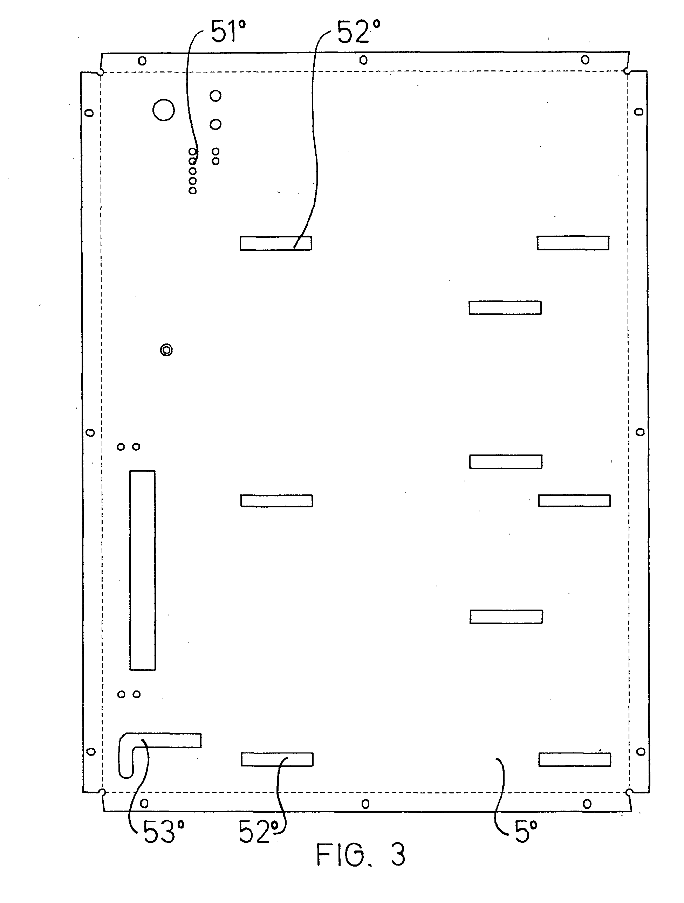

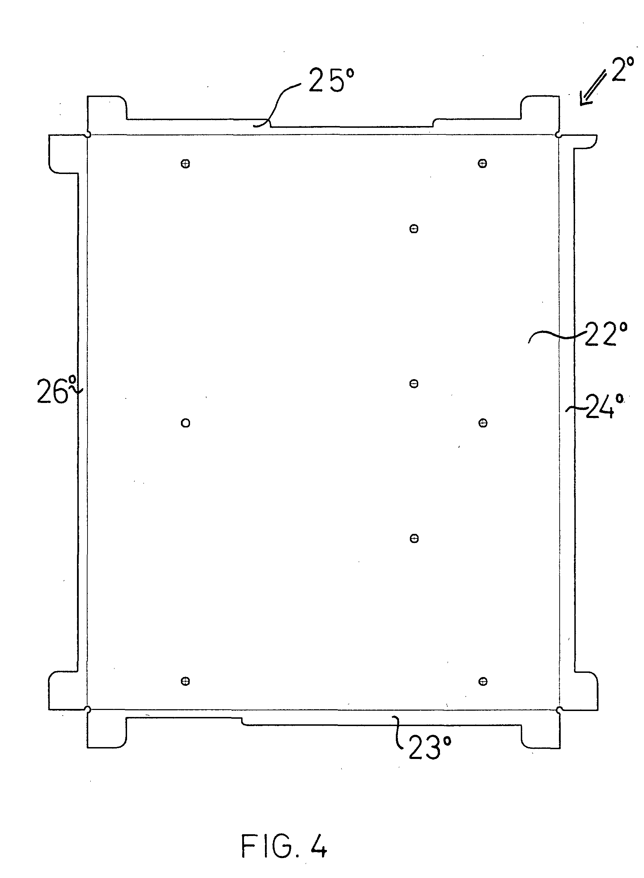

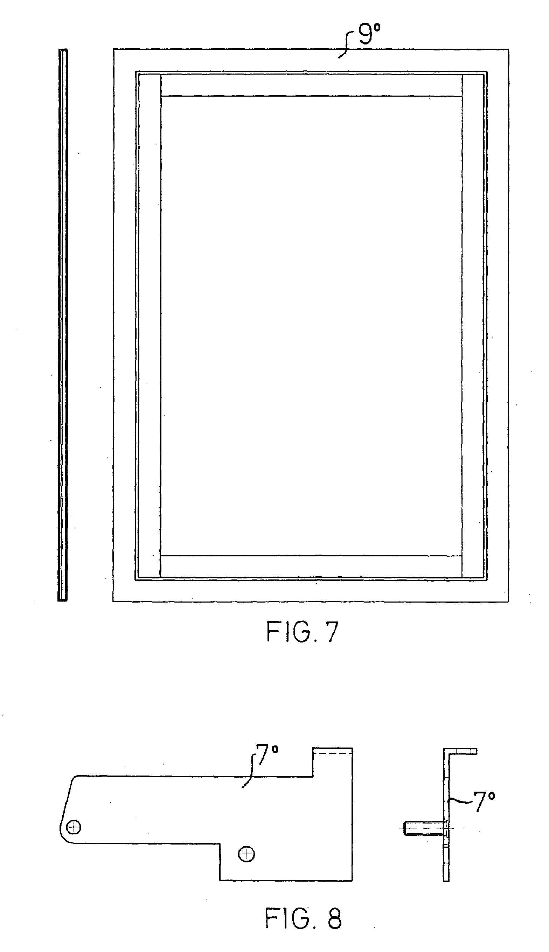

Die Halterung 2° (siehe FIG. 4, wobei die Biegelinien als feine Linie eingezeichnet sind und Bohrungen, beispielsweise für Schraubmittel oder Stifte, welche durch die Führungsschlitze 52° greifen, vorgesehen sind) ist in Führungsschlitzen 52° der Montageplatte 5° (siehe FIG. 3, wobei die Biegelinien als feine Linie eingezeichnet sind und in dem Randbereich Bohrungen, beispielsweise für Schraubmittel vorgesehen sind) verschiebbar geführt. Im einzelnen ist ein an der Montageplatte 5° gelagerter federbelasteter Hebel 7° (siehe FIG. 8) mit einer über die Montageplatte 5° herausragenden Handhabe 71° vorgesehen. Dieser ist in einer Kulisse 53° der Montageplatte 5° derart geführt (siehe FIG. 3), dass der Hebel 7° die Halterung 2° mit der Federkraft gegen die Kulisse 53° als Endanschlag zieht, wobei in dieser Position die elektrische Verbindung hergestellt ist.

Die Montageplatte 5° bilden zusammen mit einem Gehäusegrundkörper 1° (siehe FIG. 2, wobei die Biegelinien als feine Linie eingezeichnet sind und in dem Randbereich Bohrungen, beispielsweise für Schraubmittel vorgesehen sind) ein Gehäuse mit schräg gestellter Montageplatte 5° aus, wobei die sich senkrecht erstreckenden Seitenwänden 11°, 12°, 13°, 14° des Gehäusegrundkörpers 1° an den Stirnseiten von der Montageplatte 5° umgriffen werden. Dabei besteht der Gehäusegrundkörper 1° aus einer Bodenplatte 15° mit angeformten Seitenwänden 11°, 12°, 13°, 14° und die sich senkrecht zur Bodenplatte 15° erstreckenden Seitenwände 11°, 12°, 13°, 14° und die Montageplatte 5° sind durch form- oder kraftschlüssige Mittel miteinander verbunden. Die Halterung 2° ist als Platte 22° mit angeformten Seitenteilen 23°, 24°, 25°, 26° ausgebildet (siehe FIG. 4), welche das Gerät zumindest im Eckbereich umgreift (siehe FIG. 1).

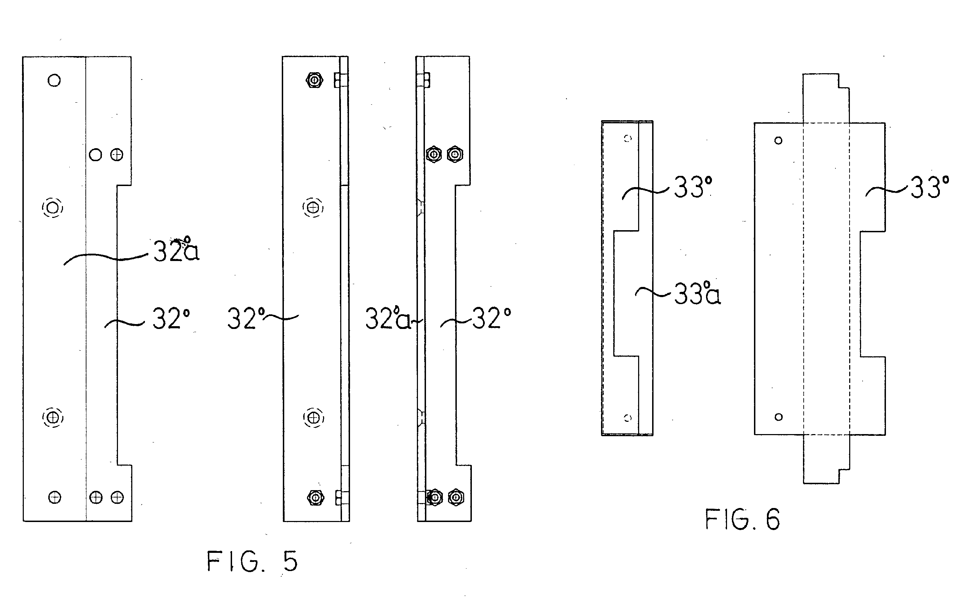

Das Steckanschlusssystem 3° besteht aus einer an der Montageplatte 5° zwischen zwei Endanschlägen beweglich gelagerten Steckvorrichtung 3° und einer geräteintern gelagerten, nicht dargestellten Buchse. Im einzelnen ist ein an der Montageplatte 5° befestigter L-förmiger Haltewinkel 32° vorgesehen, welcher mit einer Abdeckung 33° versehen ist (siehe FIG. 5 und FIG. 6). In FIG. 5 ist links der Haltewinkel 32° vor dem Biegevorgang dargestellt und in der Mitte und rechts nach dem Biegevorgang. Entsprechend zeigt FIG. 6 rechts die Abdeckung 33° vor und links die Abdeckung 33° nach dem Biegevorgang.

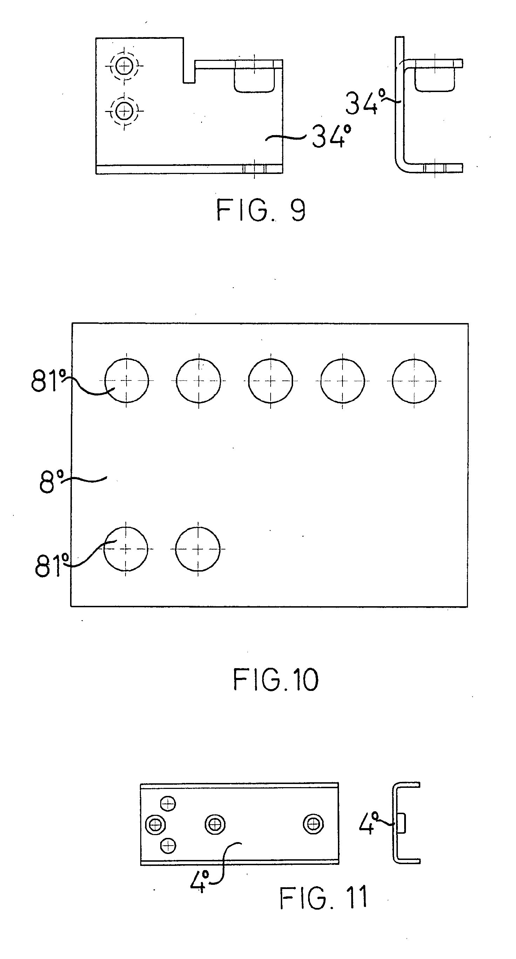

Die Steckvorrichtung 3° weist eine Leiterplatte mit eingelöteten Steckanschlusskontakten und einen an der Leiterplatte befestigten Steckrahmenteil 31° auf, wobei die Leiterplatte in einem Teilbereich von einem U-Profil 34° (siehe FIG. 9) zur Ausgestaltung von einstellbaren Endanschlägen umgriffen wird. Auf der gegenüberliegenden Seite ist die Leiterplatte durch elastische Mittel, vorzugsweise durch Gummihülsen, kraft- oder formschlüssig mittels Haltewinkel 32° und Montageplatte 5° gelagert. Die montierte Leiterplatte erstreckt sich in den Zwischenraum zwischen Montageplatte 5° und Gehäusegrundkörper 1°, wobei der daraus herausragende Teil an einem Schenkel 32°a des Haltewinkels 32° gelagert ist. Das Steckrahmenteil 31° erstreckt sich dann durch eine Ausnehmung 33°a der Abdeckung 33° nach vorne auf das korrespondierende Verbindungsteil des Geräts zu.

Die Leiterplatte trägt SMD-Leuchtdioden und eine Lichtleitereinheit, wobei das von den SMD-Leuchtdioden emittierte Licht mittels der Lichtleitereinheit und durch Ausnehmungen 51° der Montageplatte 5° zur Anzeigeseite umgelenkt wird. Die Lichtleitereinheit besteht aus. stabförmigen Lichtleitern und einer Bohrungen 81° aufweisenden Platte 8° als Montagehilfe (siehe FIG. 10). Schließlich sind ein Funkmodem M° mit beispielsweise über ein Scharnier 10° schwenkbaren Antennenhalter 4° (Antennenhalter 4, siehe FIG. 11) und eine an der Unterseite der Bodenplatte 15° angebrachte Rutschplatte 9° (siehe FIG. 7) vorgesehen.

Die Bedienung der erfindungsgemäßen Vorrichtung erfolgt wie nachstehend beschrieben:
(1) Zunächst sind die Komponenten aus einer Transporttasche/Koffer herauszunehmen. Hierzu die erfindungsgemäße Vorrichtung (nachstehend als Grundplatte bezeichnet) am Griff aus dem Koffer herausziehen und dann mit der Lederseite (Rutschplatte 9°) auf den Tisch stellen. Den Drucker am Gehäuse (nicht am Kabel) herausziehen und links daneben platzieren.
(2) Einsetzen des Notebooks, d.h. Schlittenverriegelung (federbelasteter Hebel 7° mit Handhabe 71°) auf der Grundplatte nach rechts drücken und Halterung 2° (nachstehend als Schlitten bezeichnet) nach unten schieben, das Notebook zuerst am oberen Ende des Schlittens 2° einsetzen, dann unteren Teil absetzen, Grundplatte festhalten und Notebook nach unten schieben, bis es fest in einer Notebookhalterung 21°, beispielsweise Haltehaken, verankert ist und die untere Schlittenleiste bündig mit der Grundplatte abschließt. Ein Hochheben des unteren Teils des Notebooks ist jetzt nicht mehr möglich. Den Schlitten 2° mit dem Notebook nach oben schieben, bis die Schlittenverriegelung sichtbar und hörbar einrastet (federbelasteter Hebel 7° gegen Kulisse 53°). Das Notebook ist jetzt richtig angeschlossen.
(3) Druckerkabel mit dem Drucker-Stecker an die Drucker-Schnittstelle (Anschlussanordnung 6°) links an der Grundplatte anschließen. Die Gegenseite mit einem Centronics- und einem Hohlstecker, an den Drucker anschließen.
(4) Einsetzen des Funkmodem- SIM (Chip zur Freischaltung des Funkmodems, angeordnet auf der Rückseite des Gehäusegrundkörpers 1°). Die erfindungsgemäße Vorrichtung ist nun betriebsbereit.
(5) Akku-Kapazitätsanzeige kontrollieren. Sind die Leuchtdioden LED 1 bis LED5 an, dann ist der interne Akku voll. Bei erstmaligem Betrieb wird empfohlen einen Ladevorgang einzuleiten (siehe unten). Zum Anzeigeverhalten siehe weiter unten. Zum Laden des internen Akkus muss das externe 130W-Netzteil (Betrieb und Laden) verwendet werden. Grundplatte über den dreipoligen Versorgungsstecker am rechten oberen Ende mit dem Netzteil verbinden, bis der Verriegelungshebel hörbar einrastet (Beim Abziehen des Netzteils einfach den Riegel drücken). Den Stecker des Netzteils in die Steckdose stecken, wobei auf den Spannungsbereich geachtet werden sollte (100V bis 120V oder 200V bis 240V).Wahlweise kann auch das 60W-Netzteil (Betrieb) verwendet werden. Damit kann allerdings der interne Akku nicht aufgeladen werden.

Um genügend Energiereserven bei minimalem Gewicht bereitstellen zu können, kann in der erfindungsgemäßen Vorrichtung ein Li-Ion (Lithium-Ionen) -Akkupack verwendet. Der Akkupack besteht beispielsweise aus sechs Einzelzellen mit einer Nennspannung von 21,6V und einer Kapazität von 3600mAh und speichert Energie von maximal 78 Wh. Damit ist ein Dauerbetrieb des Systems von min. 5h sichergestellt, wenn der Notebook-Akku ebenfalls geladen ist.

Jede einzelne Zelle besitzt eine Schutzschaltung, die ein Überladen bzw das Tiefentladen der Zellen verhindert. Als weiterer Schutz ist noch eine irreversible Schmelzsicherung vorhanden, die bei Kurzschluss der Zelle durchbrennt. Eine zusätzliche Sicherheit gegen Explosion ist in Form eines Überdruckventils eingebaut. Der Akkumulator wird hauptsächlich mit einem Konstantstrom von ca. C/4 (0.89A +/- 15%) aufgeladen. Der Schnell-Ladevorgang der Ladeschaltung dauert beispielsweise maximal ca. 5 1/2 h min und typische Ladezeiten bei leerem Akkumulator betragen ca. 4h.

Mit der Ladezustandsüberwachung werden Lade- und Entladeaktivitäten kontrolliert, wobei z.B. Akkutyp, Selbstentladung, Temperatur und Laderate berücksichtigt werden. Über eine beispielsweise fünfstellige Ladeanzeige wird die vorhandene Kapazität in 20% Schritten dargestellt. Anhand der Akkuzustandsanzeige werden dann Verbraucher, je nach Kapazitätszustand und extern anliegender Spannungsversorgung, abgeschaltet.

Bei angelegter externer Spannung werden Notebook, Drucker und Modem versorgt. Ist kein externes Netzteil angeschlossen und die Akkukapazität soweit verbraucht, dass die dritte Anzeige-LED gerade erlischt, dann schaltet die Notebook-Versorgung vom System-Akkumulator auf den Notebook-Akkumulator um. Lediglich der Drucker und das Modem werden noch vom System-Akkumulator versorgt. Dadurch ist sichergestellt, dass sich das System gleichmäßig entlädt. Die Druckerspannung ist eingeschaltet, sobald die Drückerschnittstelle aktiv ist. Das ist immer dann der Fall, wenn das Notebook eingeschaltet ist und sich nicht im Hibernations-Modus (Energiesparmodus → Notebookdeckel zugeklappt) befindet. Wenn der Notebookdeckel zugeklappt wird, kann damit auch der Drucker abgeschaltet werden, so dass Energie eingespart werden kann. Das Modem wird aktiviert, sobald das Notebook eingeschaltet ist. Befindet sich das Notebook im Hibernations-Modus, dann läuft das Modem weiter und der Drucker wird abgeschaltet.

In der Praxis hat sich die Benutzung zweier Netzteile als vorteilhaft herausgestellt, beispielsweise laufen während des Betriebs mit einem 130W-Netzteil (Betrieb und Laden) alle Spannungsversorgungen und der Ladecontroller ist aktiv. Dagegen laufen während des Betriebs mit einem 60W-Netzteil (Betrieb) alle peripheren Spannungsversorgungen (Notebook, Modem und Drucker), jedoch das Laden wird unterbunden. Es kann auch eine integrierte Temperaturüberwachung vorgesehen werden, welche das Laden des Akkus außerhalb des spezifizierten Temperaturbereichs verhindert. Der vorgeschriebene Temperaturbereich reicht von 1°C bis 41°C. Wenn der Temperaturbereich nicht eingehalten wird, blinkt die LED7 (siehe unten) bei eingestecktem externen Netzteil. Das Betreiben von peripheren Komponenten durch den internen Akku ist weiterhin möglich, solange es der Ladezustand zulässt. (Temperaturbereich der angeschlossenen Geräte beachten, siehe jeweilige Betriebsanleitung).

Zur Information über die Energieversorgung der erfindungsgemäßen Vorrichtung können beispielsweise sieben Leuchtdioden vorgesehen werden, z.B.:
- LED1 bis LED5: zeigen den Ladezustand an.
- LED7: zeigt an, ob ein externes Netzteil angeschlossen ist.
- LED6: zeigt den Ladevorgang an.

Die Ladevorgangsanzeige LED6 zeigt verschiedene Ladezustände an, wobei beispielsweise der Akkumulator nur mit dem 130W-Netzteil (Betrieb und Laden) geladen werden kann. Ist dieses Netzteil angeschlossen, dann muss LED7 dauerhaft leuchten; ist das 60W-Netzteil (Betrieb) angeschlossen, dann wird kein Ladevorgang eingeleitet, d.h. LED 6 bleibt aus.

| **LED6** | **Nebenbedingung** | **Ladevorgang,** |
|---|---|---|
| aus | 130W-Netzteil angeschlossen | kein Akku angeschlossen |
| kurzes Blinken (maximal 10s Dauer) | 130W-Netzteil angeschlossen | Schnell-Ladevorgang anstehend |
| andauerndes Blinken | 130W-Netzteil angeschlossen | kein Akku angeschlossen |
| ein | 130W-Netzteil angeschlossen | Schnell-Lade-Modus |
| aus | 130W-Netzteil angeschlossen & LED6 hat davor dauernd geleuchtet & LED1 bis LED5 ein | Schnell-Laden beendet |

Die fünf Leuchtdioden LED1, LED2, LED3, LED4, LED5 zeigen die zur Verfügung stehende Kapazität des Akkus an; beim erstmaligem Einsatz kann die Akkuanzeige geringfügig abweichen:

| | | | | | |
|---|---|---|---|---|---|
| Zustand 1 | LED1..5 | leuchten | => | 100% - 80% | Akkukapazität |
| Zustand 2 | LED1..4 | leuchten | => | 79% - 60% | Akkukapazität |
| Zustand 3 | LED1..3 | leuchten | => | 59% - 40% | Akkukapazität |
| Zustand 4 | LED1..2 | leuchten | => | 39% - 20% | Akkukapazität |
| Zustand 5 | LED1 | leuchtet | => | 19% - 0% | Akkukapazität |
| Zustand 6 | LED1 | blinkt 4Hz | => | VEDV1 | Early Warning Spannung |
| Zustand 7 | LED1 | aus | => | VEDVF | Empty Spannung |

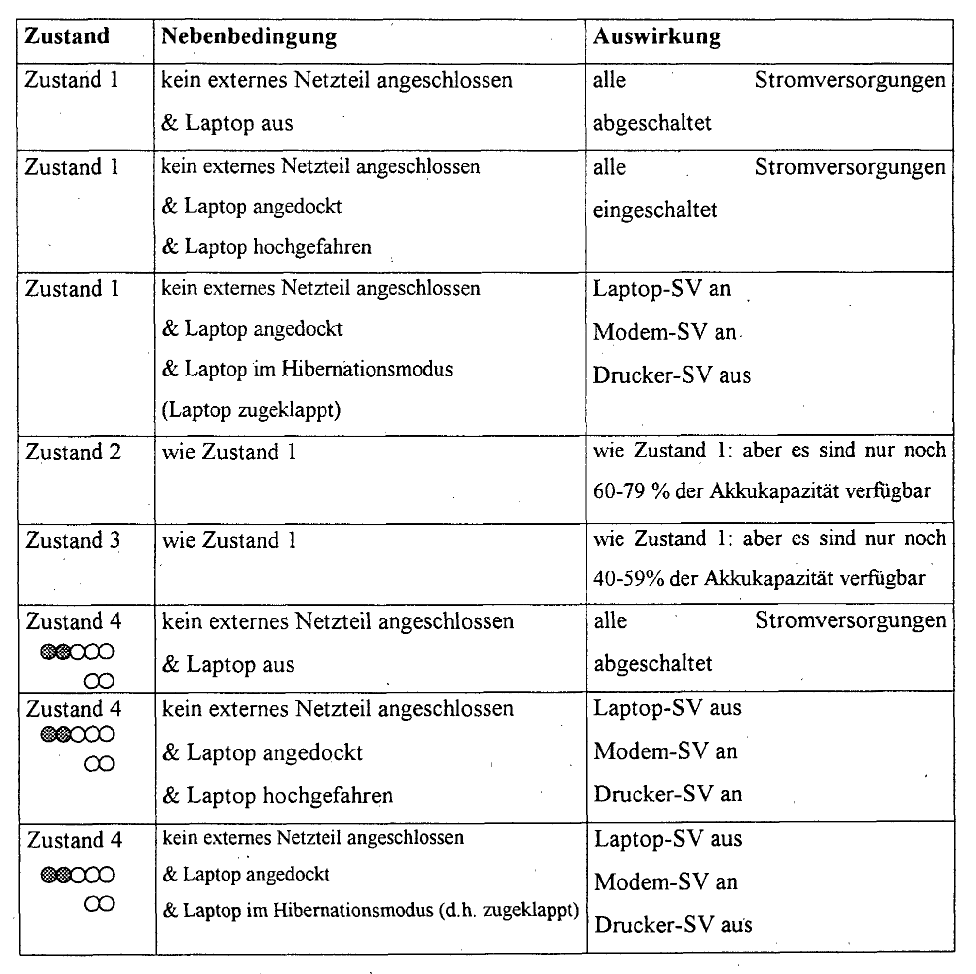

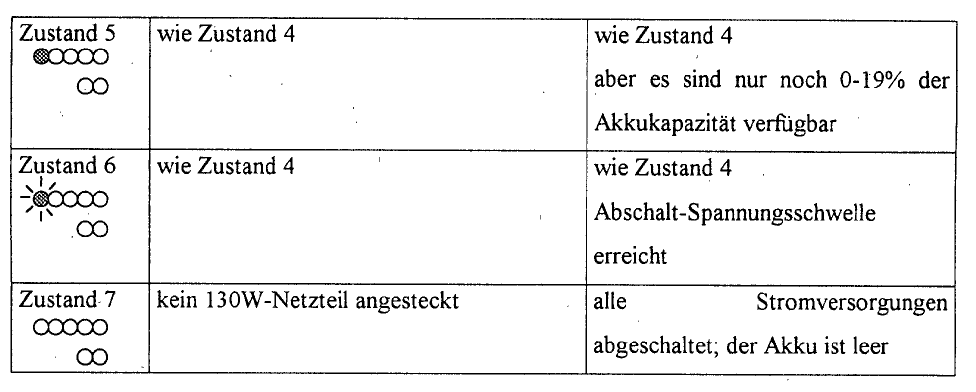

Die LED7 soll das Erkennen von Netzteil- und Temperaturfehlern erleichtern. Nach Anstecken eines externen Netzteil können nachfolgende Zustände eintreten:

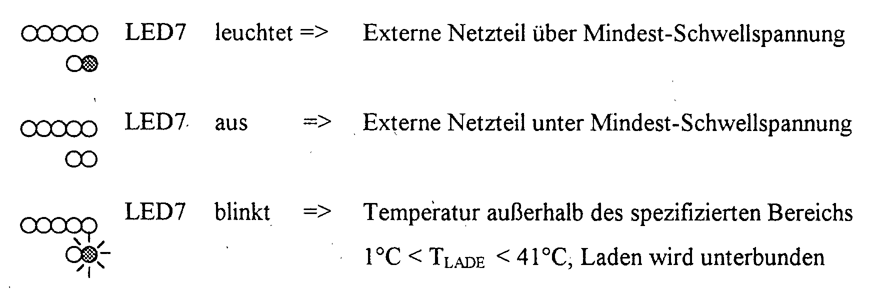

Der Einsatz der erfindungsgemäßen Vorrichtung ist für den Gebrauch innerhalb von beheizten Büroräumen konzipiert. Die Akku-Technologie ermöglicht ein netzunabhängiges Arbeiten, beispielsweise fünf Stunden lang, und die LED-Anzeige hält dabei über den Ladezustand auf dem Laufenden. Der Betriebstemperaturbereich ist auf den internen Akku abgestimmt und weicht von dem der externen Komponenten ab.

| | | | | |
|---|---|---|---|---|
| empfohlener Betriebstemperaturbereich | 5°C | bis | 35°C | laut Notebook-Beschreibung |
| maximaler Betriebstemperaturbereich | -20°C | bis | 60°C | maximale Akku- Verträglichkeit |
| Ladetemperaturbereich | 1°C | bis | 41°C | außerhalb kein Laden möglich |
| empfohlene Lagertemperatur | 0°C | bis | +25°C | Niedrige Selbstentladungsrate des Akku |
| Transporttemperatur: | -20°C | bis | +60°C | maximale Akku- Verträglichkeit |
| Relative Luftfeuchte: | 0% | bis | 80% | nicht kondensierende Luftfeuchtigkeit |
| Vibration: | gesicherter Transport in der Tragetasche | | | |

Spätestens sechs Monate nach Lieferung sollte ein vollständiger Lade- und Entladezyklus gefahren werden.

### Laden

Wird das externe 130W-Netzteil (Betrieb und Laden) angeschlossen, leuchtet LED7. LED6 blinkt zunächst und leuchtet schließlich dauerhaft während des Ladevorgangs. Während des Ladens wird nach und nach die Kapazitätsanzeige aktualisiert und immer mehr LEDs leuchten. Ist die Ladeschlussspannung erreicht, erlischt LED6 und die Kapazitätsanzeigeanzeige-LEDs LED1..5 werden gesetzt, d.h. alle fünf LEDs leuchten bei abgeschlossenem Ladevorgang.

### Entladen

Mit dem Entladen der Akkus erlöschen nacheinander die Kapazitätsanzeige-LEDs bis schließlich LED 1 blinkt und auch noch erlischt. Ist das der Fall, ist keine Energieentnahme mehr aus dem Akku möglich.

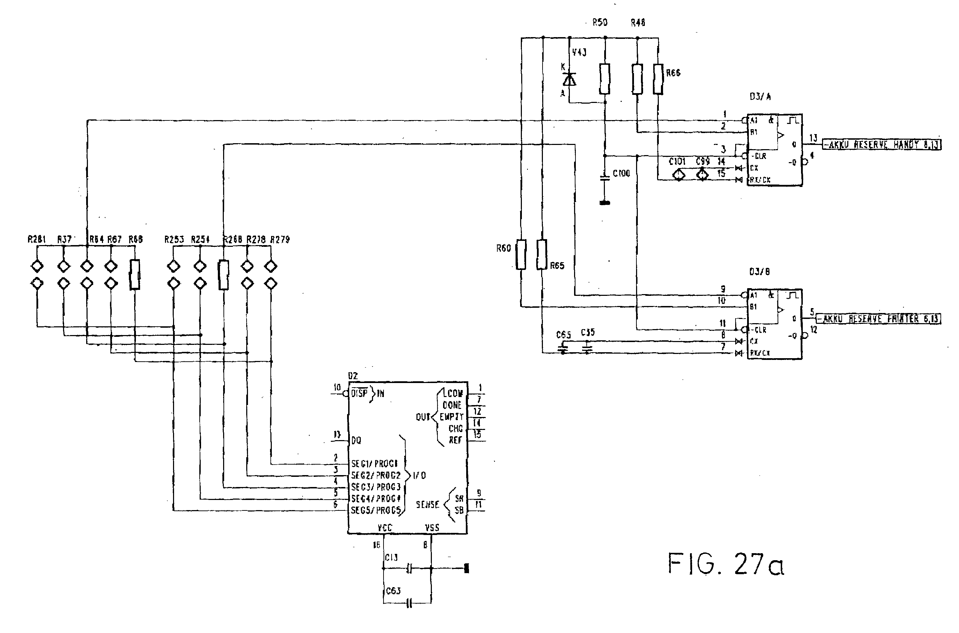

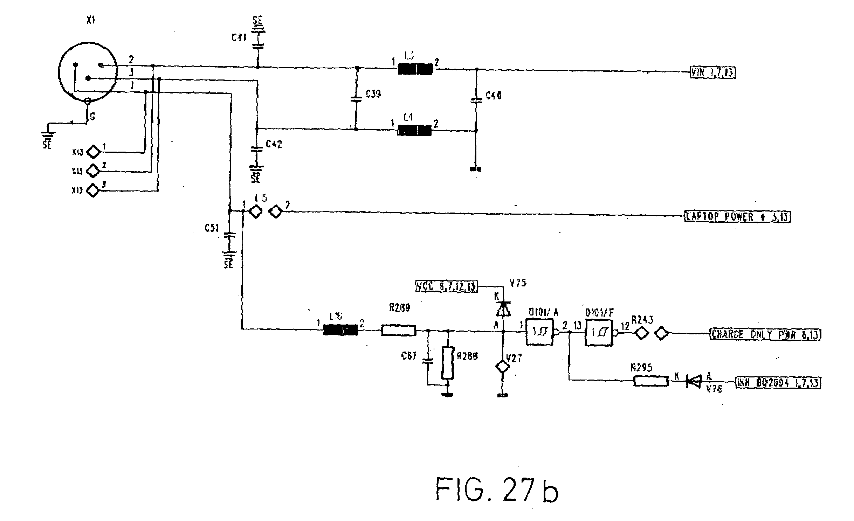

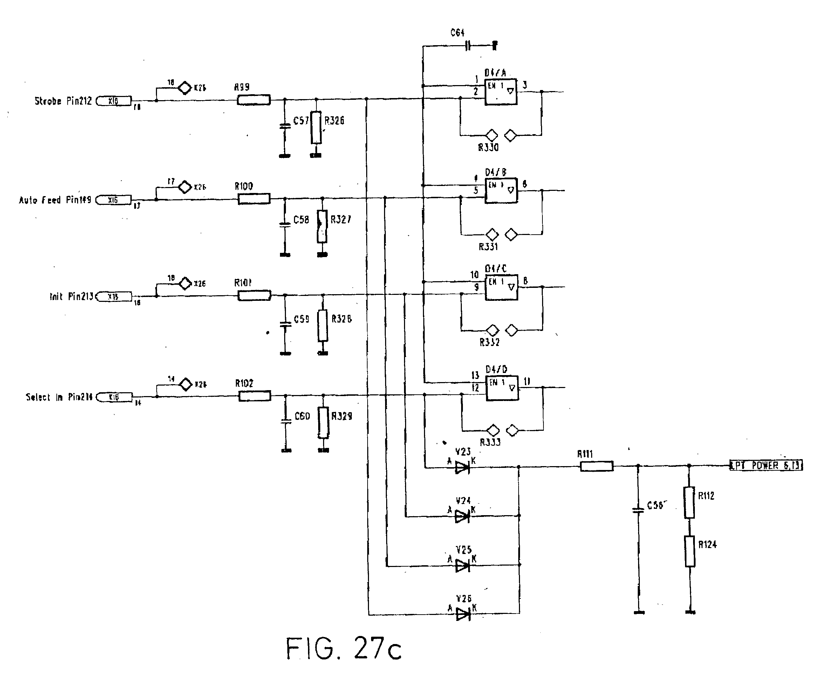

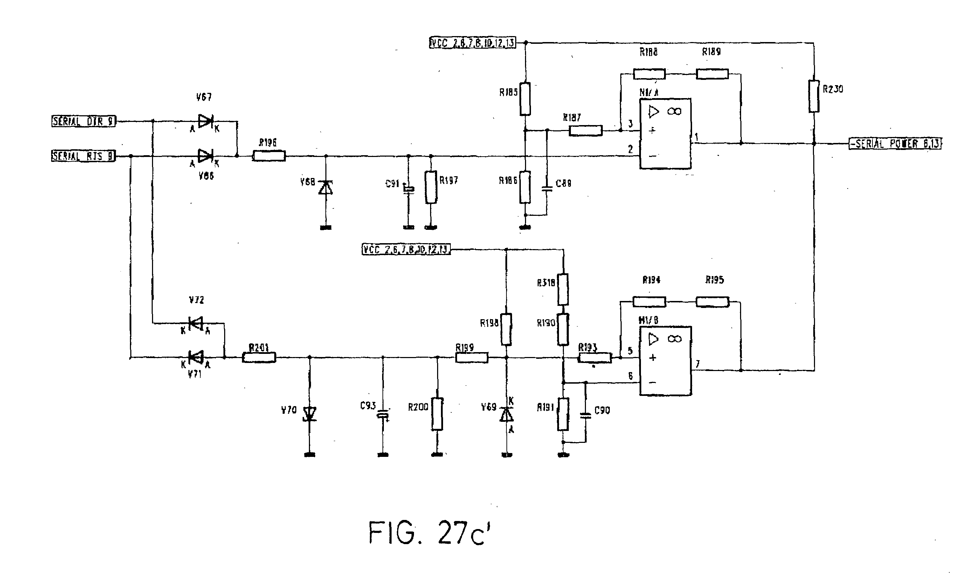

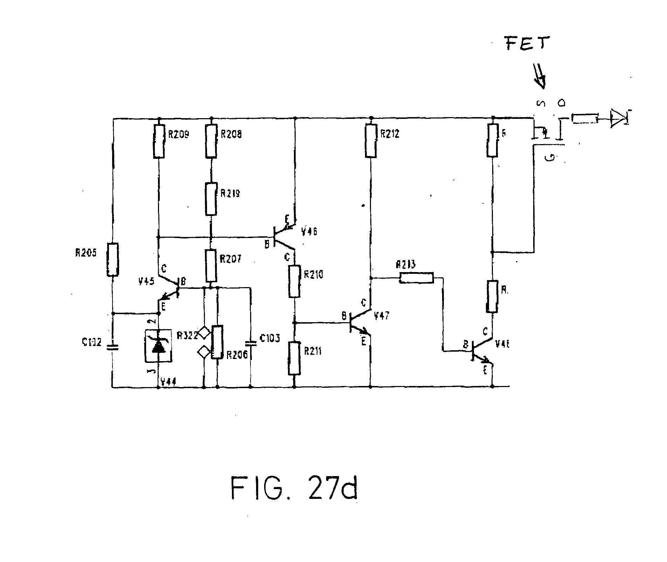

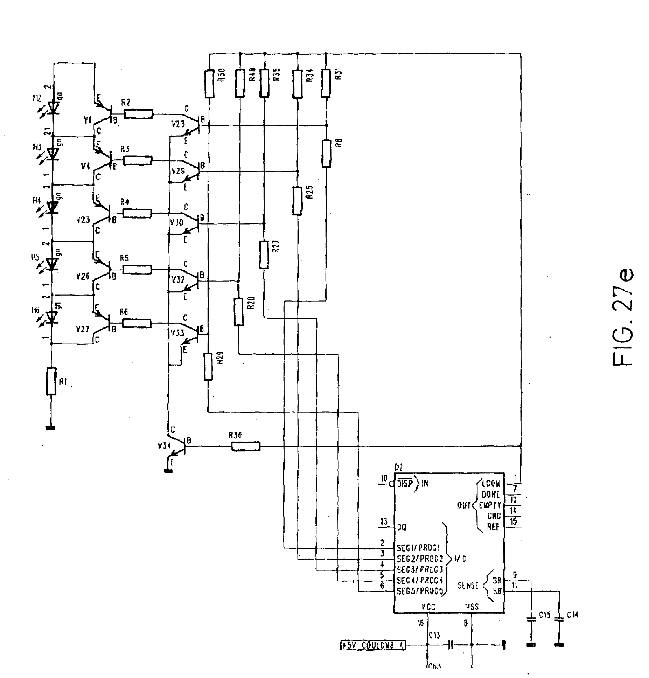

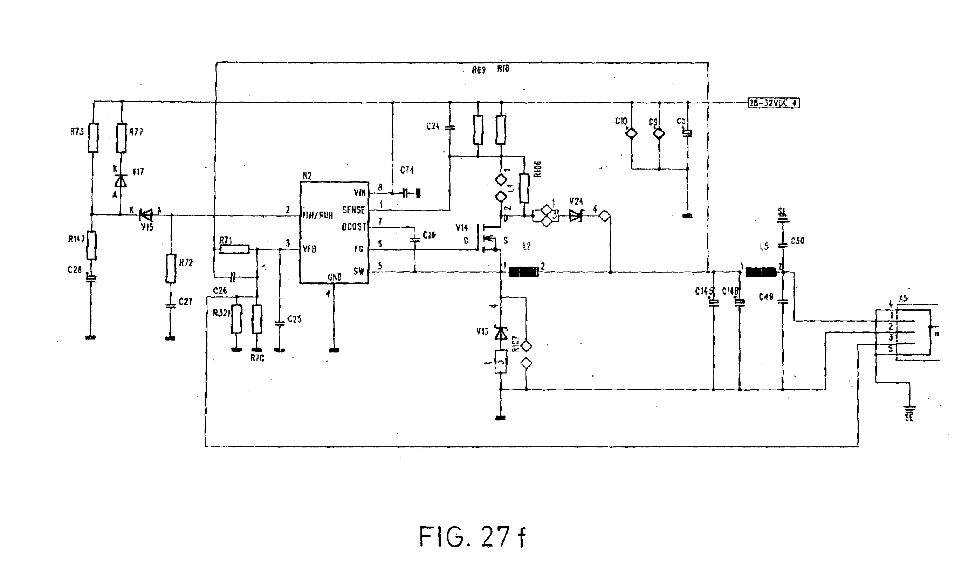

Einzelheiten zu vorstehend beschriebenen Funktionen sind der Schaltungsanordnung des Netzteils sowie der Ladezustandsüberwachung bei der Energieversorgung der erfindungsgemäßen Vorrichtung gemäß FIG. 27a, 27b, 27c, 27d, 27e und 27f zu entnehmen. Der Ladecontroller steuert die Energieverteilung im System abhängig vom Ladezustand des Akkus. Durch Widerstandsbestückung, z.B. R68 in R268 (siehe FIG 27 a) kann dies variabel eingestellt werden. Beispielsweise werden bei voll geladenen Akku alle Komponenten mit Strom versorgt, bei 60% Restladung wird eine Komponente abgeschaltet, Bei 20% Restladung wird eine weitere Komponente abgeschaltet und bei vollständig entladenen Akku erfolgt zum Schutz des Akkus vollständige Abschaltung.

FIG. 27b zeigt Einzelheiten der Schaltungsanordnung zur Veränderung des Akkuladestroms in Abhängigkeit der verfügbaren Eingangsleistung und Ausgangsleistung, welche nach Maßgabe der Pinbelegung (siehe pin 1, 2 oder 3 in FIG. 27b links oben; an Belegung der pins wird die Leistung des Netzteils erkannt) erfolgt. Beispielsweise ist bei Anschluss eines 130W Netzteiles der Betrieb sämtlicher angeschlossener Geräte und gleichzeitiges Schnellladen des Akkus möglich (d.h. pin 2 und 3 belegt). Bei Anschluss eines 70W Netzteiles ist der Betrieb aller angeschlossener Geräte möglich, die Ladung des Akkus wird jedoch verhindert (d.h. pin 1, 2 und 3 belegt).

FIG. 27c und 27c' zeigen Einzelheiten der Schaltungsanordnung demgemäss der Ladecontroller auf Standardschnittstellensignale, wie V24, Druckerschnittstelle, PS2 oder TTL reagiert. Über verschiedene PC Standardschnittstellen, beispielsweise die Parallelschnittstelle gemäß FIG. 27c und serielle Schnittstelle gemäß FIG. 27c', kann der Betriebszustand des Notebooks ermittelt werden und damit auch die angeschlossenen Peripheriegeräte entsprechend ein- oder ausgeschaltet werden (z.B. im suspend mode TTL-Signal an serieller Schnittstelle und stromlos an Parallelschnittstelle; wenn nun das Display des notebooks zugeklappt wird, wird der Drucker ausgeschaltet jedoch das GSM-Modem bleibt aktiv).

FIG. 27d zeigt Einzelheiten der Schaltungsanordnung zur Realisierung eines leistungsarmen elektronischen Überspannungsschutzes der Ausgangsspannungen. Demgemäss ist ein FET-Schalter FET als elektronische Sicherung vorgesehen.

FIG. 27e zeigt Einzelheiten der Schaltungsanordnung zur Realisierung einer Stromsparschaltung der Akku-Statusanzeige. Hierbei wird mittels dem Transistor-Array (siehe FIG. 27e links oben) ein Überbrücken der in Serie geschalteten LEDs und ein komplementärer Betrieb erreicht, so dass quasi der Stromverbrauch einer LED anfällt und damit Akkustrom gespart wird.

FIG. 27 f zeigt schließlich die Einstellung der Ausgangsspannung durch Kodierung der Anschlussleitung. Hierzu ist ein Widerstand im Kabel enthalten, welcher gemessen wird (siehe FIG. 27 f links) und zur entsprechenden Einstellung der Ausgangsspannung (laptopspezifisch) führt.

Die vorstehend beschriebene erfindungsgemäße erste Vorrichtung in Form eines mobilen Büros zeichnet sich durch eine kleine, leichte Arbeitseinheit und ein einfaches Handling (sämtliche Anschlüsse über ein Steckanschlusssystem 3°, sogenanntes Docking-Port) aus und ist komfortabel (schräge Ebene für ergonomisches Arbeiten) mit den Funktionen: Docking-Mechanismus zur Notebookaufnahme, zentrale Stromversorgung und zentraler integrierter Akku für alle Komponenten (z.B. Handy/GSM-Modem und Notebook) mit flexiblen Powermanagement (d.h. integrierte, intelligente Steuerungs- und Ladeelektronik mit Zusatzakkus mit Schutzbeschaltung, Lademöglichkeit über Netz und optional über Autobatterie und Überspannungsschutz), Druckerkabel mit integrierter Stromversorgung, integriertes GSM-Modem und Betriebs- und Fehleranzeige sowie Akkuzustandsanzeige über LED. Dadurch kann der Verkaufsberater seine Produkte oder Dienstleistungen zeitgemäß direkt vor Ort beim Kunden präsentieren; insbesondere der Datentransfer über GSM ermöglicht es, während des Beratungsgesprächs online auf Firmendaten zuzugreifen und aktuelle Preise abzufragen, Angebote und Verträge können unmittelbar beim Kunden ausgedruckt werden. Die erfindungsgemäße Vorrichtung kann auch in einer robusten Tasche aus Polyamid transportiert werden. Beim Beratungsgespräch wird nur die schlanke, mit Leder verkleidete Vorrichtung (Grundeinheit) auf den Tisch gestellt. Der Drucker wird separat in der Tasche mitgeführt und lediglich bei Bedarf über ein spezielles Kabel mit nur einem Handgriff angeschlossen. Die Versorgungszuleitung ist im Druckerkabel integriert, um den Anschluss zu vereinfachen. Das Notebook ist über das Steckanschlusssystem A3 (Docking-Port) an die Grundplatte gekoppelt. Im Docking-Port ist die Portreplikator-Schnittstelle integriert, über die alle Komponenten ansprechbar sind.

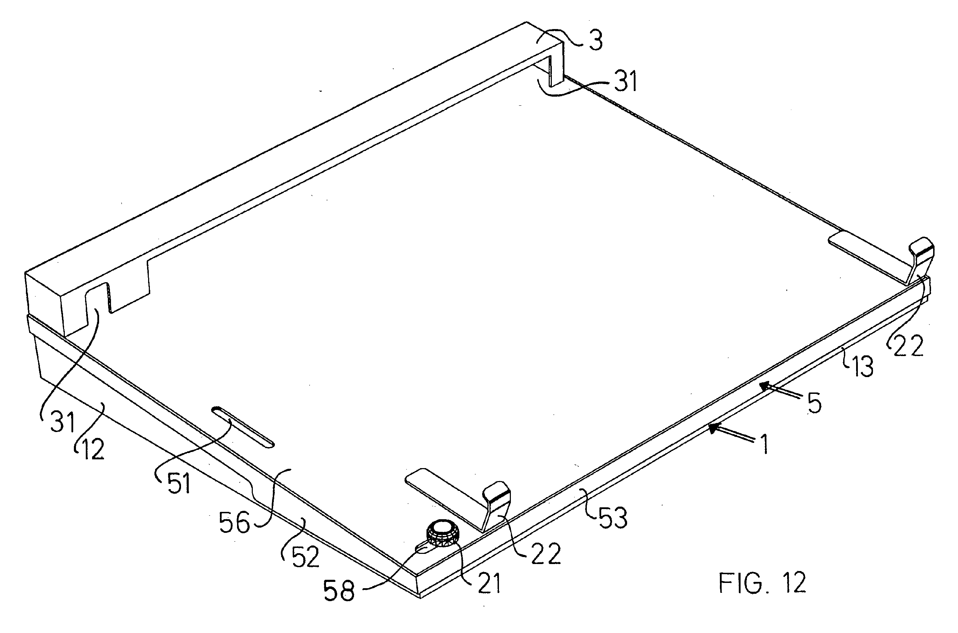

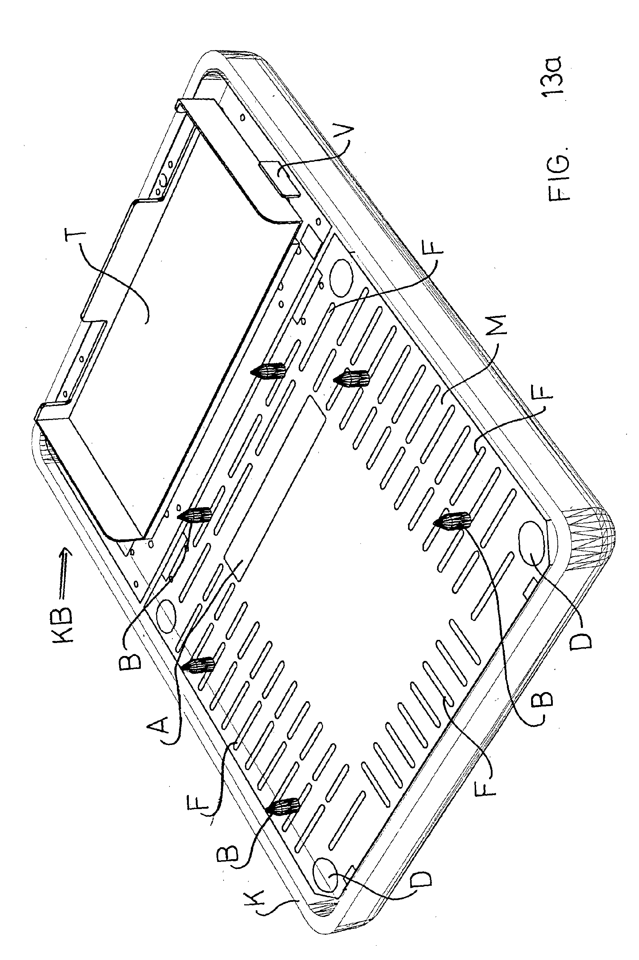

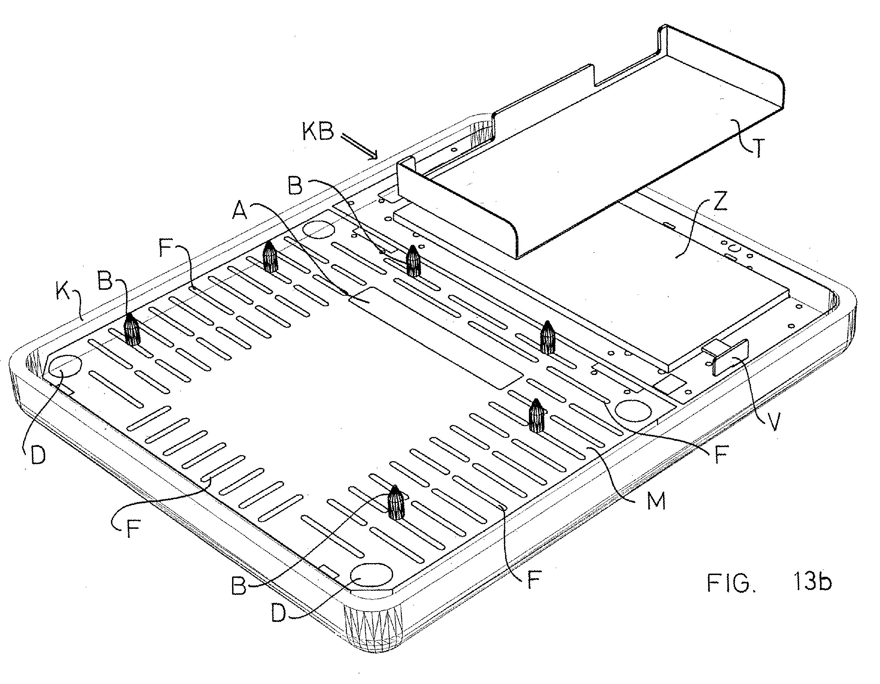

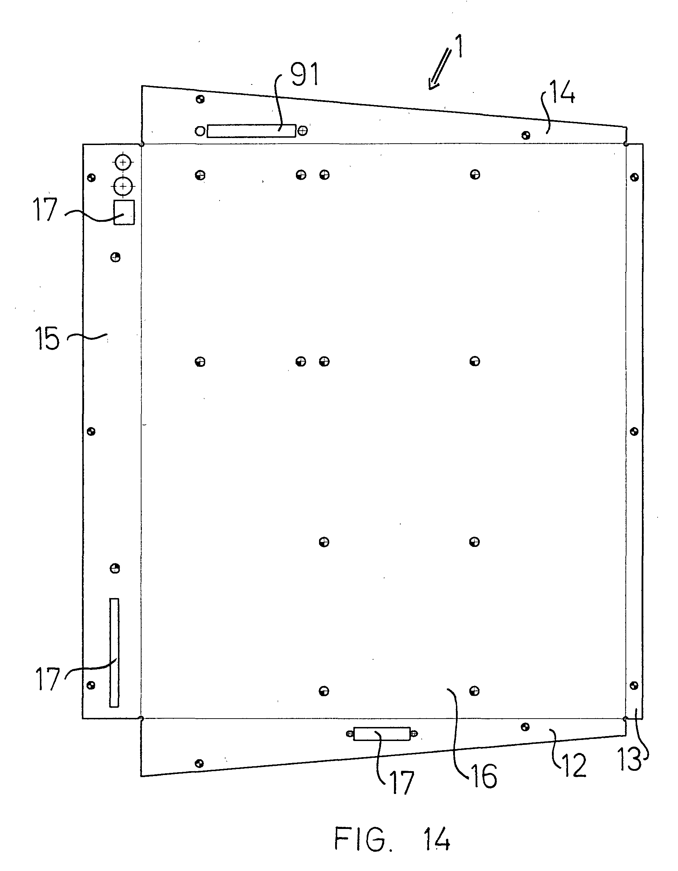

FIG. 12 zeigt eine Schrägansicht einer zweiten Ausführungsform der erfindungsgemäßen tragbaren Vorrichtung zur Aufnahme und Halterung für Geräte und/oder Zubehör eines mobilen Büros und die FIG. 14 bis FIG. 20 zeigen Einzelheiten hierzu. FIG. 13a, FIG. 13b und FIG. 21 bis FIG. 26 zeigen die perspektivische Ansicht einer dritten Ausführungsform und Einzelheiten hierzu.

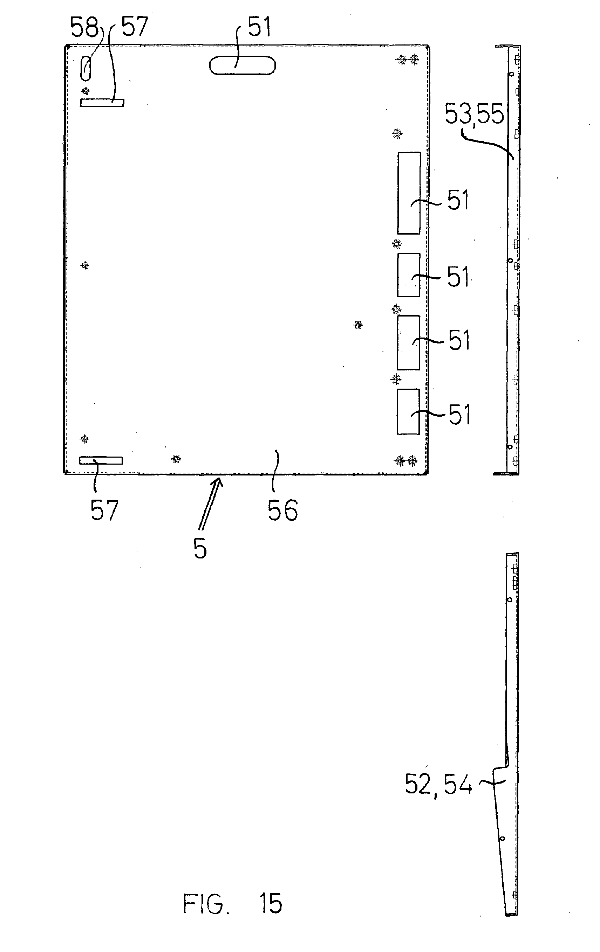

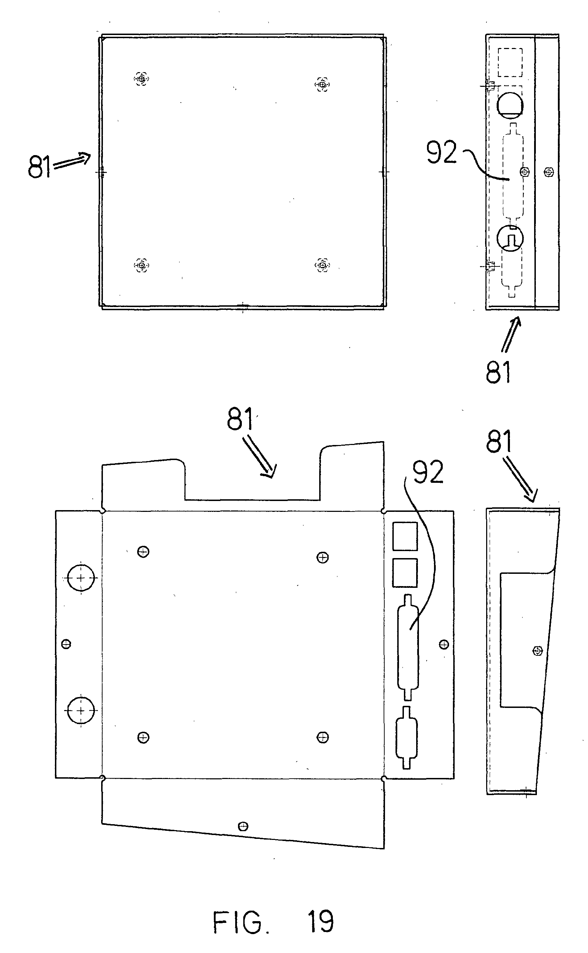

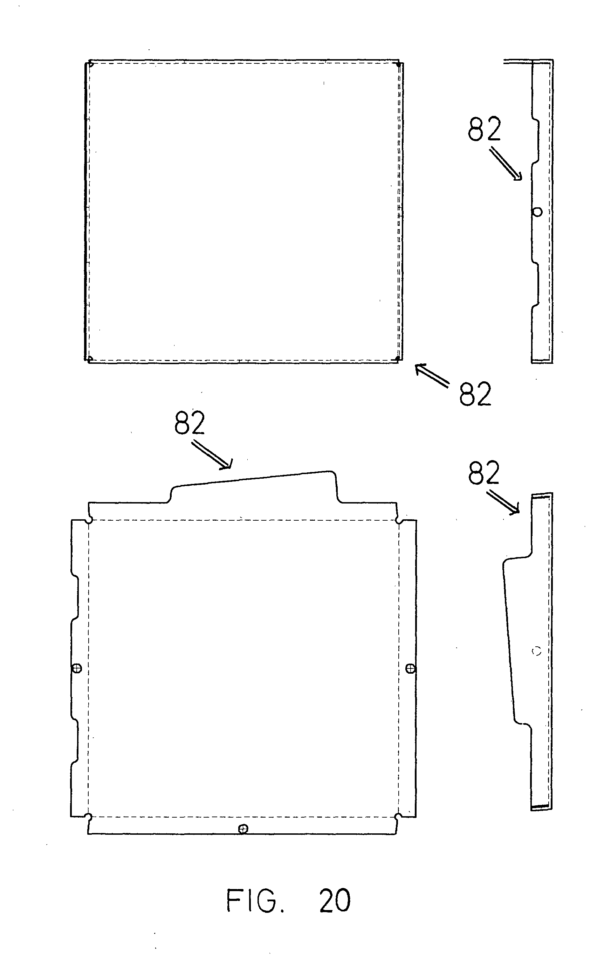

Bei der in FIG. 12 dargestellten Ausführungsform weist die tragbare Vorrichtung ein zweiteiliges Gehäuse 1, 5 auf. Das Gehäuseunterteil 1 (siehe FIG. 14, wobei die Biegelinien als feine Linie eingezeichnet sind und in dem Randbereich Bohrungen, beispielsweise für Schraubmittel vorgesehen sind) und das Gehäuseoberteil 5 (siehe FIG. 15) bestehen jeweils aus einer Bodenplatte 16, 56 mit angeformten Seitenwänden 12, 13, 14, 15; 52, 53, 54, 55, wobei die sich senkrecht erstreckenden Seitenwände 12, 13, 14, 15 des Gehäuseunterteils 1 an den Stirnseiten von den Seitenwänden 52, 53, 54, 55 des Gehäuseoberteils 5 umgriffen werden. Die sich überlappenden Seitenwände 12, 13, 14, 15; 52, 53, 54, 55 des keilförmigen Gehäuses sind vorzugsweise durch form- oder kraftschlüssige Mittel miteinander verbunden. Die Seitenwände 12 und 15 des Gehäuseunterteils 1 tragen Buchsen 17 zum Anschluss von Zubehör und die Seitenwand 14 eine Buchse 91 zum Anschluss einer Anschlussbox (siehe FIG. 19 Grundplatte 81 und FIG. 20 Deckel 82) sowie einen in der Zeichnung nicht dargestellten Haltegriff; vorzugsweise an der rückwärtigen Seitenwand 15.

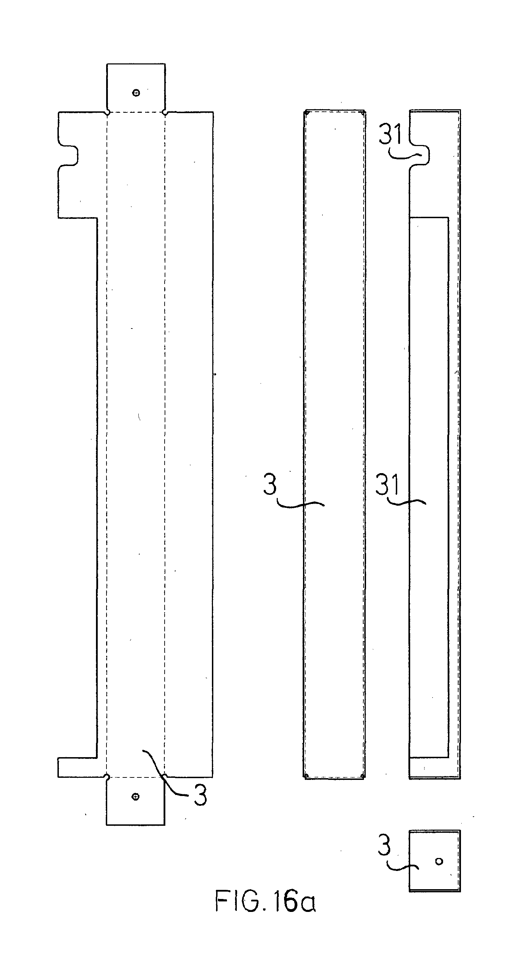

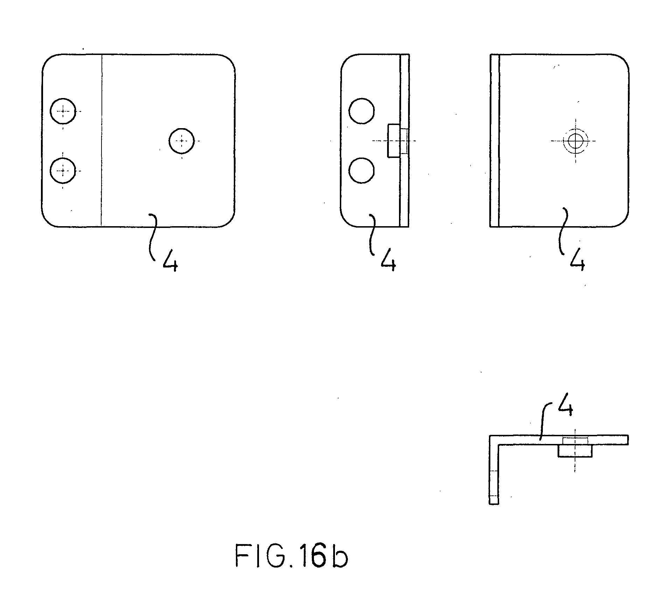

Außen am Gehäuseoberteil 5 ist ein Gerät, vorzugsweise ein Laptop, mittels einer Halterung 21, 22 lösbar befestigt. Durch Ausnehmungen 51 im Gehäuseoberteil 5 herausgeführte Kabel sind mit den Anschlussanordnungen des Laptops steckbar verbunden. Die in FIG. 12 dargestellte Ausnehmung 51 (in der Bodenplatte 56 in der Mitte linksseitig) kann zum Schutz des Kabels mit einem Kantenschutz verkleidet sein. Die in FIG. 15 dargestellten Ausnehmungen 51 im hinteren Randbereich der Bodenplatte 56 werden von einer Abdeckung 3 (siehe FIG. 16a, wobei die Biegelinien der an der Platte angeformten Seitenteilen als feine Linie eingezeichnet sind und in den Seitenteilen der Abdeckung 3 mindestens zwei Bohrungen, beispielsweise für Schraubmittel vorgesehen sind) abgedeckt, wobei die Anschlusskabel durch mindestens eine Ausnehmung 31 aus dem Innern der Vorrichtung herausgeführt sind. Die Befestigung der Abdeckung 3 erfolgt mittels L-förmigen Halter 4 am Gehäuseoberteil 5 (siehe FIG. 16b, wobei die Biegelinien als feine Linie eingezeichnet sind und am Schenkel Bohrungen, beispielsweise für Schraubmittel vorgesehen sind).

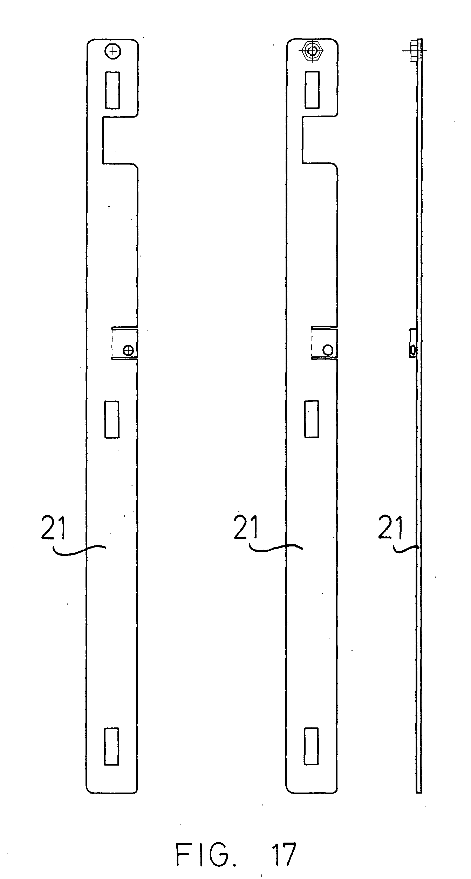

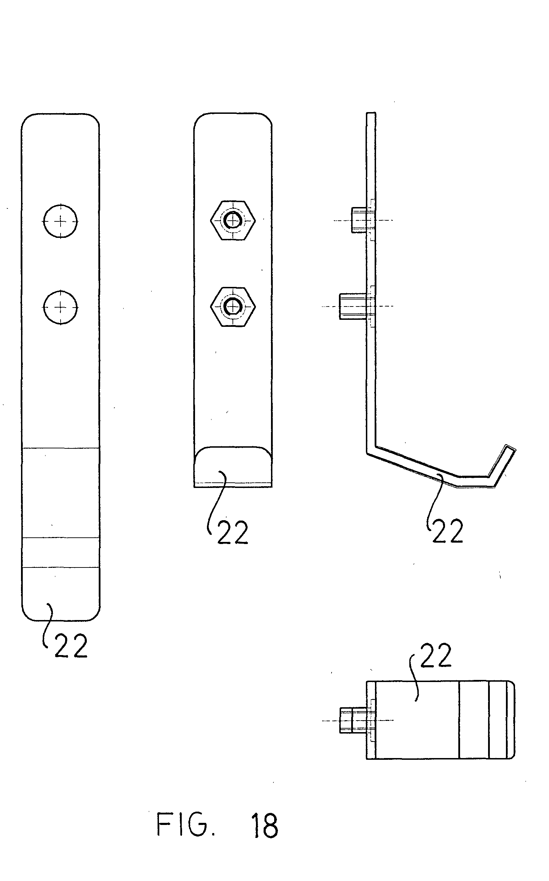

Das Laptop ist durch manuelle Betätigung der zwischen zwei Positionen verschiebbaren Halterung 21, 22 in Form- oder Klemmeingriff lösbar befestigt. Hierzu weist die Halterung einen über das Gehäuseoberteil 5 herausragenden und in deren Aussparung 58 geführten Riegel mit Handhabe 21 (siehe FIG. 17) und von diesem ver- und entriegelbare, in Führungsschlitzen 57 des Gehäuseoberteils 5 geführte, federbelastete Halteteile 22 (siehe FIG. 18) auf. Ver- und Entriegelung sind zwangsläufig ausgestaltet, d.h. nur wenn beide Halteteile 22 sich in gleicher Position befinden.

Das Laptop ist auf der Vorrichtung so befestigt, dass beide Komponenten zusammen eine transportable Einheit bilden. Die Abnahme des Laptops kann entsprechend den Anforderungen des Kunden so ausgestaltet werden, dass diese nur mit einem Spezialwerkzeug möglich ist. Durch die Keilform ist das Gehäuse 1, 5 ergonomisch geformt. Zur Verbindung aller Laptop-Anschlüsse inklusive eines PCMCIA-Anschlusses zur Vorrichtung werden die Leitungen vollständig und gegen äußere Beschädigungen geschützt im Inneren der Vorrichtung geführt.

Im Inneren der Vorrichtung befinden sich beispielsweise ein Chipkartenleser, eine Datenverschlüsselungseinheit zur Kryptisierung der zu übertragenden Daten, eine Stromversorgung für das Laptop, die Datenverschlüsselungseinheit und einen Drucker, sowie ein ISDN-Adapter und eine Anschlussleiterplatte für eine Anschaltbox 81, 82. Durch die Integration der Leiterplatte und des ISDN-Anschlussadapters der PCMCIA-Karte werden die ISDN-Daten grundsätzlich über die Verschlüsselungseinheit geleitet. An der Vorrichtung werden folgende Schnittstellen des Laptops und der PCMCIA-Karten herausgeführt: LAN (twisted Pair), ISDN (RJ45), Mouse (PS2), sowie Drucker und Stromversorgung. Die Anschlüsse sind fest verdrahtet und zugentlastet. Dadurch wird Verschleiß, bedingt durch das sonst übliche häufige Schließen und Öffnen der Steckverbindungen am Laptop aber auch an den störanfälligen Anschlusssteckern der PCMCIA-Karten vermieden.

Für den mobilen Einsatz kann vorzugsweise ein Drucker mit eingebautem Ni-MH-Akku verwendet werden. Der Anschluss des Druckers an die Vorrichtung erfolgt zur einfachen Handhabung durch ein spezielles Kabel, das sowohl die Datenleitungen als auch Stromzuführungsleitungen zusammenfasst. Der Druckerakku kann über die in der Vorrichtung integrierten Elektronik geladen werden. Zur Versorgung dieser Elektronik ist ein kompaktes externes Netzteil mit einer Leistung von ca. 70 W vorgesehen. Der Wirkungsgrad der Spannungsversorgung liegt über 80 %. Damit wird eine übermäßige Erwärmung im Gehäuse 1, 5 vermieden. Zur Information über die Energieversorgung der erfindungsgemäßen Vorrichtung können beispielsweise Leuchtdioden vorgesehen werden, welche den Ladezustand und/oder den Ladevorgang und/oder ob ein externes Netzteil angeschlossen ist anzeigen; weiterhin können LED's zur Betriebs- und Fehleranzeige vorgesehen werden.

Die Unterseite der Bodenplatte 16 des Gehäuseunterteils 1 ist zur Schonung von Tischplatten und zur Gewährleistung eines rutschfesten Standes mit einem weichen Überzug versehen, alternativ können hier auch Gummifüße angeordnet werden.

Für den mobilen Einsatz kann eine Tasche vorgesehen werden, in welcher Platz für folgende Komponenten ist:
- Vorrichtung mit Laptop,
- Drucker,
- externes Netzteil,
- Druckerpapier und
- ein schmaler DIN A4-Ordner.

Zusätzlich sind Fächer für Schreibmaterial und Visitenkarten vorhanden. Bei Bedarf kann ein standardmäßig beigepackter Trageriemen an der Tasche angebracht werden. Zum Tragen bzw. Herausnehmen aus der Tasche ist an einer Seitenwand des Gehäuseunterteils 1, vorzugsweise an der Rückseite, der Haltegriff angebracht.

Die zweiten Ausführungsform der erfindungsgemäßen tragbaren Vorrichtung erfüllt Anforderungen hinsichtlich eines extrem kompakten Aufbaus und nach einem eleganten Design gleichermaßen und ist sowohl für den Außendienst als auch für den Innendienst mit leicht handhabbarer Adaptierfähigkeit an das home-office konzipiert. Hierzu ist eine Anschaltbox 81, 82 vorgesehen, welche es dem Anwender erlaubt, auf einfachste Weise die Vorrichtung auch in dieser Umgebung zu betreiben. Das Gehäuse der Anschlussbox ist zweiteilig ausgeführt und weist eine Grundplatte 81 und einen Deckel 82 auf. Grundplatte 81 und Deckel 82 sind zur Vereinfachung der Fertigung in gleicher Weise wie das Gehäuseunterteil 1 und Gehäuseoberteil 5 der Vorrichtung ausgestaltet und montiert (siehe FIG. 19 und FIG. 20, wobei die Biegelinien als feine Linie eingezeichnet sind und in dem Randbereich Bohrungen, beispielsweise für Schraubmittel vorgesehen sind). Die Verbindung zwischen Anschaltbox 81, 82 und Vorrichtung erfolgt dabei beispielsweise über eine 240-polige Steckverbindung 91, 92, wobei auf die Steckverbindung 91, 92 einwirkende Kräfte von den Seitenwänden aufgefangen werden. Folgende Schnittstellen werden über diese Steckverbindung 91, 92 herausgeführt:
- LAN,
- externer Monitor,
- externe Maus (PS2),
- externe Tastatur (PS2),
- externer Drucker und
- ISDN-Anschluss.

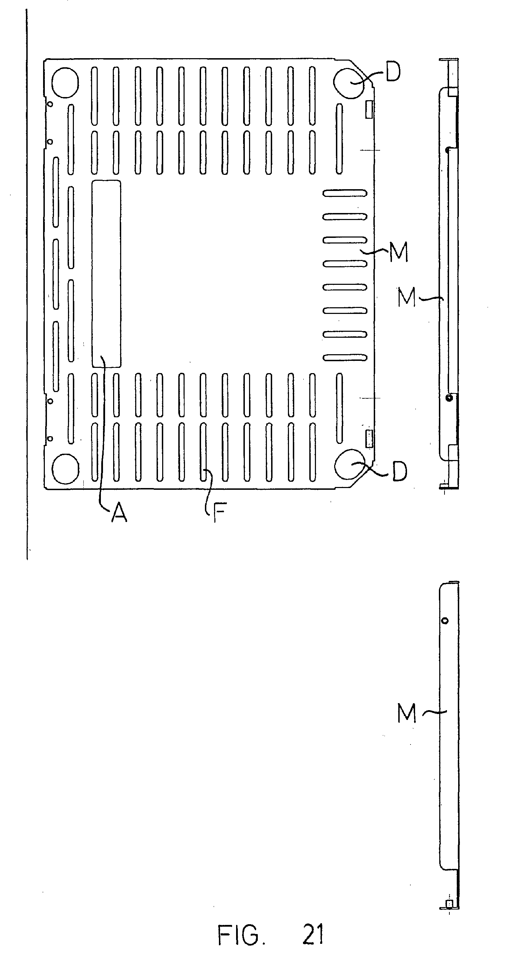

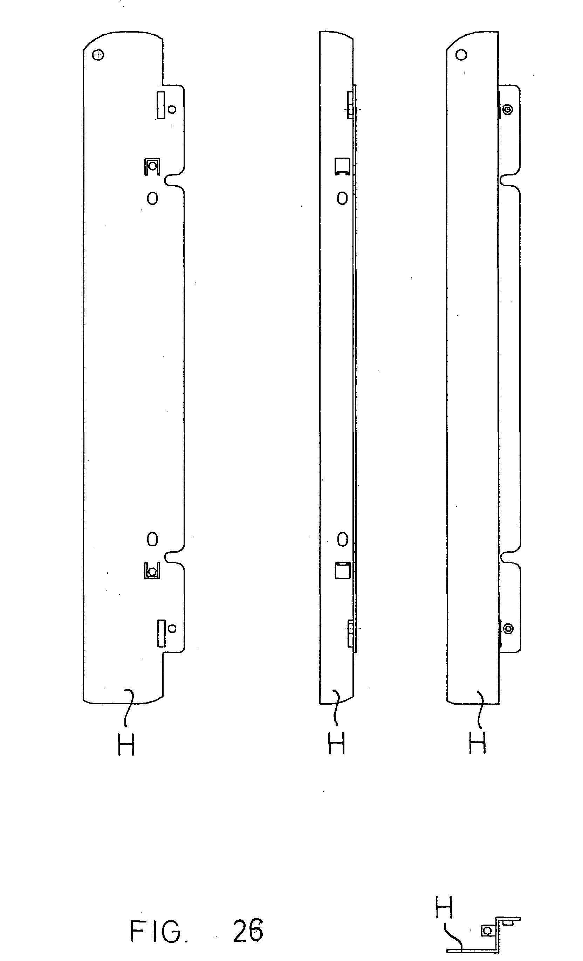

Wie FIG. 13a sowie FIG. 13b und FIG. 21 bis FIG. 26 zeigen, ist bei der dritten Ausgestaltung der erfindungsgemäßen tragbaren Vorrichtung, diese als Handkoffer mit einer im Abstand zum Kofferboden KB gelagerten Montageplatte M ausgestaltet. In Führungsschlitzen F der Montageplatte M sind verschiebbare Befestigungsmittel B vorgesehen, welche auf der Montageplatte M angeordnete Geräte und/oder Zubehör in Form- und/oder Klemmeingriff halten (siehe FIG. 21; Montageplatte M). Die elektrische Verbindung zwischen Gerät und Zubehör kann über Kabel erfolgen, welche durch eine Ausnehmung A der Montageplatte M herausgeführt sind. Die Montageplatte M ist schwenkbar (beispielweise über ein Scharnier) gelagert und kann durch Rastmittel in einer Schließstellung an der Kofferschale K festgelegt werden. Hierzu ist ein Haltewinkel H vorgesehen (siehe FIG. 26), welcher beispielsweise mindestens einen die Montageplatte M durchgreifenden Rasthaken trägt. Zur Verstellung der Befestigungsmittel B kann die Montageplatte M nach Entrastung am Durchgriff D hochgezogen (wobei Rasthaken und Durchgriff D zur Einhandbetätigung in Griffweite liegen) und dabei über das Scharnier verschwenkt werden, so dass nun bequem die Einstellung der Befestigungsmittel B (Rändelschraube o. dgl.) von der Unterseite der Montageplatte M erfolgen kann.

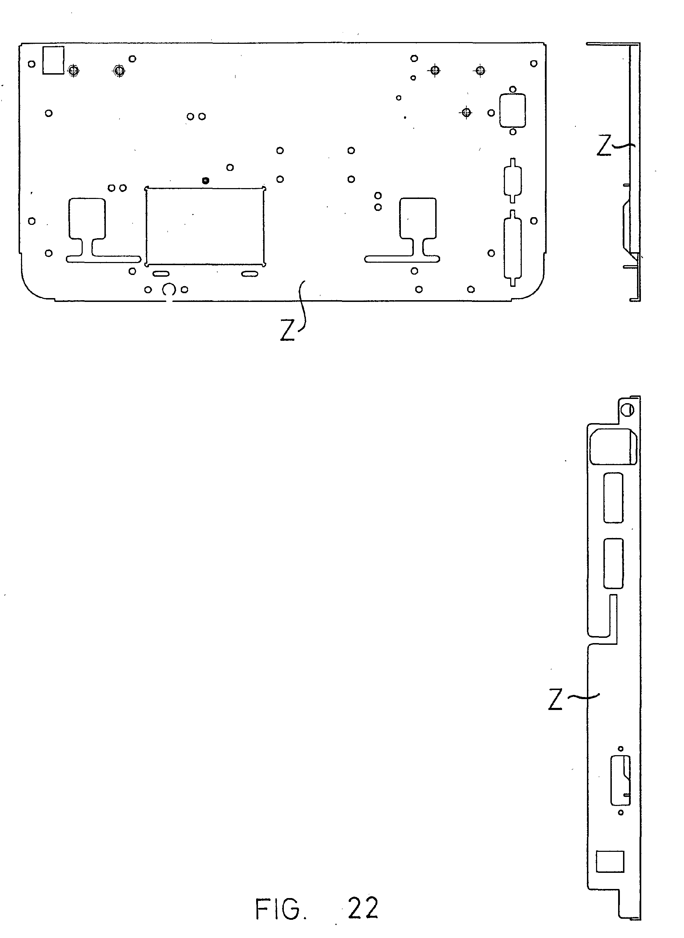

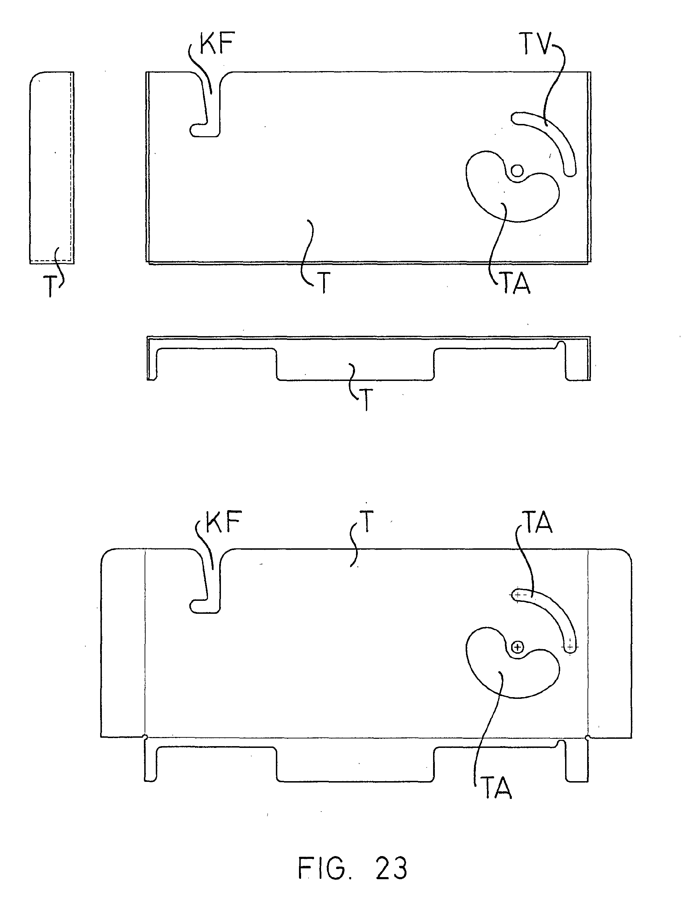

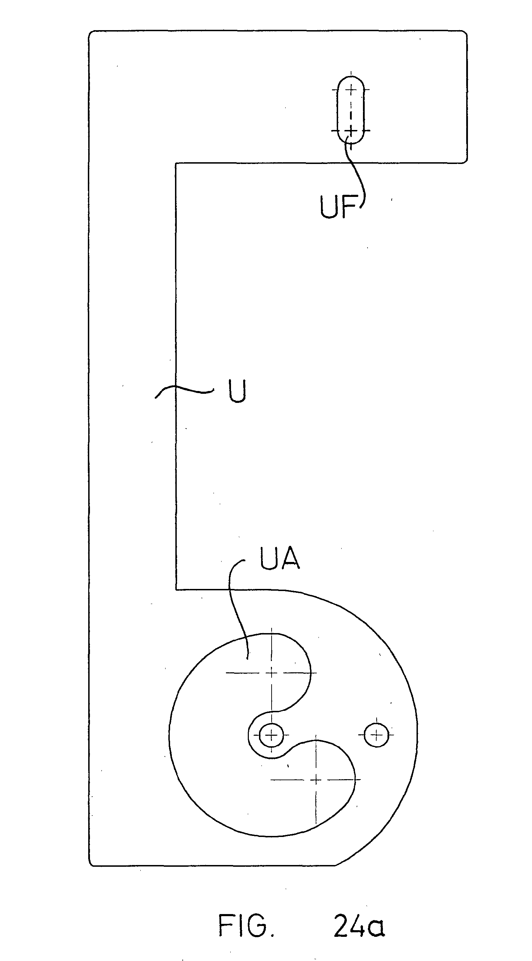

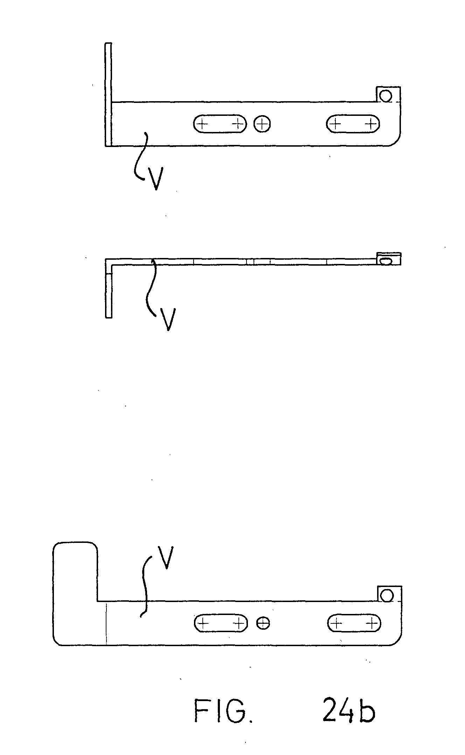

Der Kofferdeckel (in der Zeichnung nicht dargestellt) und der Kofferboden KB sind lösbar miteinander verbunden (beispielsweise mittels ein-/aushängbarer Laschen-Stiftverbindung). Neben der Montageplatte M ist eine aus dem Kofferboden KB heraus verschwenkbare Tragplatte T (siehe FIG. 23, wobei die Biegelinien als feine Linie eingezeichnet sind) angeordnet. Das Zubehör kann zwischen hochgezogenen Seitenteilen der Tragplatte T aufgenommen und an dieser durch Klettverschlüsse befestigt werden. Für die Führung der Tragplatte T beim Verschwenken in vorzugsweise horizontaler Richtung ist eine Ausnehmung TV vorgesehen. Der Kabelanschluss des Zubehörs, beispielsweise eines Druckers, erfolgt mittels durch die Ausnehmung TA geführte Kabel. Die Tragplatte T, Verriegelungshebel V (siehe FIG. 24b, wobei die Biegelinie als feine Linie eingezeichnet ist) und zugehörige Unterlage U (siehe FIG. 24a, wobei zur Tragplatte T korrespondierende Ausnehmungen UA bzw. Führungsschlitz UF für den Verriegelungshebel V vorgesehen sind) des Schwenkmechanismus sind über ein im wesentlichen plattenförmiges Zwischenprofil Z (siehe FIG. 22) an der Kofferschale K festgelegt. Der Verriegelungshebel V kann federbelastet sein, wobei dieser durch die Kulissenführung KF in der Endstellung hörbar an die Kulissenführung KF anschlägt. Das Zwischenprofil Z kann im oberen Bereich neben der Tragplatte T Buchsen für den Anschluss des Netzkabels bzw. von Zubehör wie ein Funkmodem oder dergleichen aufweisen.

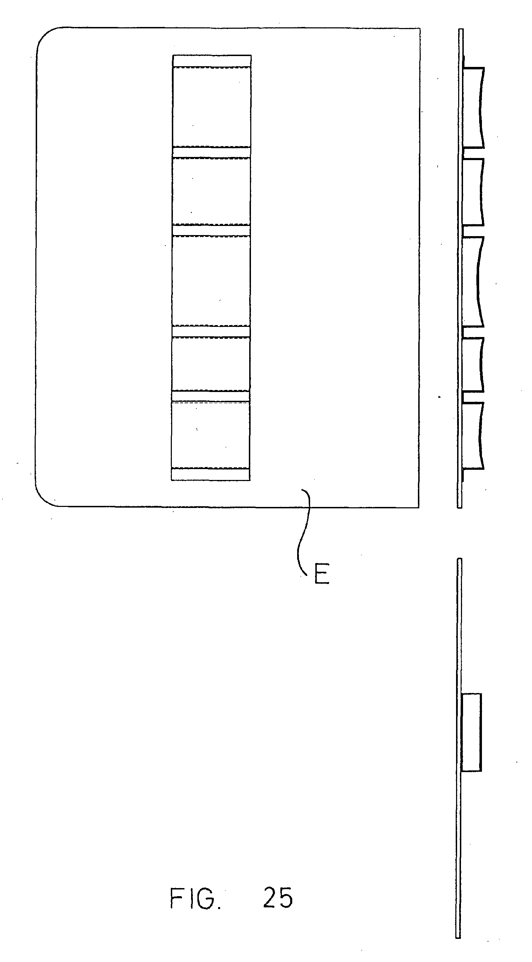

Im Zwischenraum unterhalb der Montageplatte M sind Haltemittel beispielsweise für Zubehörteile angeordnet; beispielsweise in Form einer Einlage E (siehe FIG. 25) mit Taschen oder abgesteppten Gummiband für Anschlusskabel, Akku oder dgl.

Die erfindungsgemäße tragbare Vorrichtung gemäß zweiter und dritter Ausführungsform weist den Vorteil auf, dass diese sowohl für den Außendienst als auch für den Innendienst mit leicht handhabbarer Adaptierfähigkeit an das home-office geeignet ist. Auf überraschend einfache Art und Weise wird sowohl ein transportsicherer Halt der elektrischen Geräte gewährleistet, als auch deren Befestigung, Anschluss und Inbetriebnahme durch einen ungeübten Benutzer ermöglicht. Weiterhin ist von Vorteil, dass alle Schnittstellen im eingebauten Zustand der Geräte frei zugänglich sind, dass das sonst übliche häufige Schließen und Öffnen der Steckverbindungen vermieden wird und dass die Kühlung der Geräte den Umgebungsbedingungen des Tischbetriebes ähnlich ist.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise können die Geräte über federelastische Rahmen bzw. Haltemittel (Federklammern, Gummibänder) an der Halterung A2 befestigt werden, die Halterung A2 kann verschwenkbar (z.B. aus ergonomischen Gründen) ausgestaltet werden, anstelle oder zusätzlich zum Notebookhalter A21 können Rastmittel in den Eckbereichen der Halterung A2 vorgesehen werden; die Geräte können über federelastische Rahmen bzw. Haltemittel (Federklammern, Gummibänder) befestigt werden, die Halterung kann verschwenkbar bzw. hochklappbar (z.B. aus ergonomischen Gründen) ausgestaltet werden, es kann eine stoß- und schwingungsgedämpfte Aufhängung vorgesehen werden, die fest auf der Montageplatte befestigte Geräte (beispielsweise Notebook und Drucker) durch die gedämpfte und bewegliche Verbindung zur Außenschale voll gegen mechanische Belastungen, die von außen auf den Koffer einwirken, schützt (siehe DE 298 20 834.2 U1 der Anmelderin), Kofferdeckel und Kofferboden weisen zum Wasser-Staub-Schutz eine spezielle Dichtung mit Dichtring oder Dichtlippe auf usw.

## Patentansprüche

1. Tragbare Vorrichtung für ein mobiles Büro, bestehend aus
• einem Gehäusegrundkörper (1°),
• einer als Deckel für den Gehäusegrundkörper (1°) ausgebildeten Montageplatte (5°),
• einer plattenförmigen Halterung (2°), die auf der Montageplatte (5°) befestigt ist und durch ein manuelles Betätigungselement zwischen zwei Positionen bewegbar ist, wobei die Montageplatte (5°) Teile eines Steckanschlusses (3°) trägt und wobei die Halterung (2°) sowohl als Befestigungsmittel für Geräte und/oder Zubehör in Form- und/oder Klemmeingriff dient, als auch als Mittel dient zur exakten Führung und Herstellung der elektrischen Verbindung der Geräte und/oder des Zubehörs mit dem Steckanschluss (3°).

2. Vorrichtung nach Anspruch 1, **dadurch gekennzeichnet, dass** die Halterung (2°) in Führungsschlitzen (52°) der Montageplatte (5°) verschiebbar geführt ist indem ein an der Montageplatte (5°) gelagerter federbelasteter Hebel (7°) mit einer über die Montageplatte (5°) herausragenden Handhabe (71°) vorgesehen ist, welche in einer Kulisse (53°) der Montageplatte (5°) derart geführt ist, dass der Hebel (7°) die Halterung (2°) mit der Federkraft gegen die Kulisse (53°) als Endanschlag zieht, wobei in dieser Position die elektrische Verbindung hergestellt ist.

3. Vorrichtung nach Anspruch 1, **dadurch gekennzeichnet, dass** die Montageplatte (5°) zusammen mit einem Gehäusegrundkörper (1°) ein Gehäuse mit schräg gestellter Montageplatte (5°) ausbilden, dass der Gehäusegrundkörper (1°) aus einer Bodenplatte (15°) mit angeformten Seitenwänden (11°, 12°, 13°, 14°) besteht und dass die sich senkrecht zur Bodenplatte (15°) erstreckenden Seitenwände (11°, 12°, 13°, 14°) an den Stirnseiten von der Montageplatte (5°) umgriffen werden und diese durch form- oder kraftschlüssige Mittel mit der Montageplatte (5°) verbunden sind.

4. Vorrichtung nach Anspruch 1, **dadurch gekennzeichnet, dass** das Steckanschlusssystem (3°, 4°) aus einer an der Montageplatte (5°) zwischen zwei Endanschlägen beweglich gelagerten Steckvorrichtung (3°) und einer geräteintern gelagerten Buchse besteht.

5. Vorrichtung nach Anspruch 4, **dadurch gekennzeichnet, dass** die Steckvorrichtung (3°) aus einer Leiterplatte mit eingelöteten Steckanschlusskontakten und einem an der Leiterplatte befestigten Steckrahmenteil (31°) besteht, dass die Leiterplatte in einem Teilbereich von einem U-Profil (34°) zur Ausgestaltung von einstellbaren Endanschlägen umgriffen wird, dass auf der gegenüberliegenden Seite die Leiterplatte durch elastische Mittel an der Montageplatte (5°) kraft- oder formschlüssig gelagert ist und dass die elastischen Mittel als Gummihülsen ausgestaltet sind.

6. Vorrichtung nach Anspruch 2 oder 3, **dadurch gekennzeichnet, dass** die Montageplatte (5°) auf der Unterseite eine Erhebung trägt, welche im Bewegungsweg des Hebels (7°) liegt und eine zusätzliche Vorspannkraft für die Spiralfeder des Hebels (7°) erzeugt und dass an einer der Seitenwände des Gehäusegrundkörpers (1°) ein Tragegriff angeordnet ist.

7. Vorrichtung nach Anspruch 5, **dadurch gekennzeichnet, dass** im Innern des Gehäuses eine Leiterplatte angeordnet ist, welche mindestens eine Stromversorgungseinrichtung zur Speisung des Geräts und/oder von Zubehör aufweist, dass die Leiterplatte und ein damit und sowohl mit dem Gerät als auch mit dem Zubehör in Verbindung stehender Akkumulator an der Bodenplatte gelagert sind, dass die Stromversorgungseinrichtung die Ladekapazität des Akkumulators überwacht, dass das elektrische Gerät einen geräteinternen Akkumulator aufweist und dass bei einem Unterschreiten eines vorgebbaren Mindestwertes das elektrische Gerät auf den geräteinternen Akkumulator umgeschaltet wird.

8. Vorrichtung nach Anspruch 7, **dadurch gekennzeichnet, dass** die Leiterplatte SMD-Leuchtdioden und eine Lichtleitereinheit trägt, wobei das von den SMD-Leuchtdioden emittierte Licht mittels der Lichtleitereinheit und durch Ausnehmungen (51°) der Montageplatte (5°) zur Anzeigeseite umgelenkt wird und wobei die Lichtleitereinheit aus stabförmigen Lichtleitern und einer Bohrungen aufweisenden Platte (8°) besteht.

9. Vorrichtung nach Anspruch 1, **dadurch gekennzeichnet, dass** die Montageplatte (5°) in einem freien Bereich neben der Halterung (2°) einen schwenkbaren Antennenhalter (4°, 10°) für ein Funkmodem (M°) trägt und dass die Halterung (2°) als Platte (22°) mit angeformten Seitenteilen (23°, 24°, 25°, 26°) ausgebildet ist, welche das Gerät zumindest im Eckbereich umgreift.

10. Tragbare Vorrichtung für ein mobiles Büro,
• welche als zweiteiliges Gehäuse (1, 5) ausgestaltet ist,
• das Gehäuseunterteil (1). und das Gehäuseoberteil (5) bestehen aus einer Bodenplatte (16, 56) mit angeformten Seitenwänden (12, 13, 14, 15; 52, 53, 54, 55), wobei die sich senkrecht erstreckenden Seitenwände (12, 13, 14, 15) des Gehäuseunterteils (1) an den Stirnseiten von den Seitenwänden (52, 53, 54, 55) des Gehäuseoberteils (5) umgriffen werden und die sich überlappenden Teile der Seitenwände (12, 13, 14, 15; 52, 53, 54, 55) durch form- oder kraftschlüssige Mittel miteinander verbunden sind,
• außen am Gehäuseoberteil (5) ist ein Laptop durch manuelle Betätigung einer zwischen zwei Positionen verschiebbaren Halterung (21, 22) in Form- oder Klemmeingriff lösbar befestigt,
• durch Ausnehmungen (51) im Gehäuseoberteil (5) herausgeführte Kabel sind mit den Anschlussanordnungen des Laptops steckbar verbunden, und
• die Seitenwände (12, 13, 14, 15) des Gehäuseunterteils (1) tragen Buchsen zum Anschluss von Zubehör und einen Haltegriff.

11. Vorrichtung nach Anspruch 10, **dadurch gekennzeichnet, dass** die Halterung (21, 22) einen über das Gehäuseoberteil (5) herausragenden Riegel (21) und von diesem ver- und entriegelbare, in Führungsschlitzen (57) des Gehäuseoberteils (5) geführte, federbelastete Halteteile (22) aufweist.

12. Vorrichtung nach Anspruch 10, **dadurch gekennzeichnet, dass** im Gehäuseinnern an der Bodenplatte (16) des Gehäuseunterteils (1) ein Akkumulator und mindestens ein Modul und/oder eine Baugruppe gelagert sind, welche entweder festverdrahtet oder mittels Steckverbindungen miteinander und mit dem Laptop elektrisch verbunden sind.

13. Vorrichtung nach Anspruch 10, **dadurch gekennzeichnet, dass** eine zusätzliche Anschlussbox (8) über eine vielpolige Steckverbindung (91, 92) mit der Vorrichtung elektrisch und mechanisch verbunden ist, wobei auf die Steckverbindung (91, 92) einwirkende Kräfte von den Seitenwänden aufgefangen werden und wobei über diese Steckverbindung (91, 92) ein externer Drucker, ein externer Monitor, eine externe Maus bzw. Tastatur und eine LAN-Verbindung herausgeführt sind.

14. Vorrichtung nach einem oder mehreren der Ansprüche 1 bis 13, **dadurch gekennzeichnet, dass** die Unterseite der Bodenplatte (15°, 16) mit einem weichen Überzug versehen ist oder dass an der Unterseite der Bodenplatte (15°, 16) Gummifüße angeordnet sind.

15. Tragbare Vorrichtung für ein mobiles Büro,
• welche als Handkoffer mit einer im Abstand zum Kofferboden gelagerten Montageplatte (M) ausgestaltet ist,
• in Führungsschlitzen (F) der Montageplatte (M) sind verschiebbare Befestigungsmittel (B) vorgesehen, welche auf der Montageplatte (M) angeordnete Geräte und/oder Zubehör in Form- und/oder Klemmeingriff halten
• die Montageplatte (M) ist schwenkbar gelagert und ist durch Rastmittel in einer Schließstellung an der Kofferschale (K) festgelegt.

16. Vorrichtung nach Anspruch 15, **dadurch gekennzeichnet, dass** Kofferdeckel und Kofferboden (KB) lösbar miteinander verbunden sind und dass neben der Montageplatte (M) eine seitlich benachbart und aus dem Kofferboden (KB) seitlich heraus verschwenkbare Tragplatte (T) angeordnet ist.

17. Vorrichtung nach Anspruch 15 oder 16, **dadurch gekennzeichnet, dass** das Zubehör an der Tragplatte (T) durch Klettverschlüsse befestigt ist, dass die Tragplatte (T) über ein im wesentlichen plattenförmiges Zwischenprofil (Z) an der Kofferschale (K) festgelegt ist und dass im Zwischenraum unterhalb der Montageplatte (M) Haltemittel (E) für Zubehörteile angeordnet sind.

18. Vorrichtung nach Anspruch 16, **dadurch gekennzeichnet, dass** die Tragplatte (T) eine kreiskonzentrische Ausnehmung (TV) für die Führung der Tragplatte (T) beim Verschwenken und eine weitere kreiskonzentrische Ausnehmung (TA) für die Durchführung des Kabelanschlusses des Zubehörs aufweist.

19. Vorrichtung nach Anspruch 17, **dadurch gekennzeichnet, dass** der Schwenkmechanismus einen Verriegelungshebel (V) und eine zwischen Zwischenprofil (Z) und Tragplatte (T) angeordnete Unterlage (U) aufweist, wobei zur Tragplatte (T) korrespondierende Ausnehmungen (UA) und ein Führungsschlitz (UF) für den Verriegelungshebel (V) vorgesehen sind und dass der Verriegelungshebel (V) mit einer am Zwischenprofil (Z) befestigten Zugfeder belastet und von einer Kulissenführung (KF) in der Tragplatte (T) geführt ist, wodurch der Verriegelungshebel (V) in zumindest einer Endstellung hörbar an die Kulissenführung (KF) anschlägt.
